(19) Europäisches Patentamt
European Patent Office
Office européen des brevets

(11) **EP 4 336 143 B1**

(12) **EUROPÄISCHE PATENTSCHRIFT**

(45) Veröffentlichungstag und Bekanntmachung des Hinweises auf die Patenterteilung:
**29.07.2026 Patentblatt 2026/31**

(21) Anmeldenummer: **24153205.0**

(22) Anmeldetag: **17.11.2020**

(51) Internationale Patentklassifikation (IPC):
**G01B 5/00** *(2006.01)* **G01B 5/30** *(2006.01)*
**G01B 7/16** *(2006.01)* **G01B 21/32** *(2006.01)*
**G06M 1/08** *(2006.01)* **G06M 1/27** *(2006.01)*

(52) Gemeinsame Patentklassifikation (CPC):
**G01B 5/30; G01B 5/0014; G01B 7/16; G01B 21/32;**
G06M 1/083; G06M 1/27

(54) **MIKROMECHANISCHES MESSSYSTEM ZUR MESSUNG VON DEHNUNGEN AN EINEM MESSOBJEKT UND KOMPENSATION ISOTROP WIRKENDER DEHNUNG**

MICROMECHANICAL MEASURING SYSTEM FOR MEASURING STRAIN ON A MEASUREMENT OBJECT AND COMPENSATING FOR ISOTROPICALLY ACTING STRAIN

SYSTÈME DE MESURE MICROMÉCANIQUE DESTINÉ À MESURER DES DÉFORMATIONS SUR UN OBJET À MESURER ET À COMPENSER UNE CONTRAINTE ISOTROPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2019 DE 102019131094**

(43) Veröffentlichungstag der Anmeldung:
**13.03.2024 Patentblatt 2024/11**

(62) Dokumentnummer(n) der früheren Anmeldung(en) nach Art. 76 EPÜ:
**20208176.6 / 3 822 577**

(73) Patentinhaber: **mechIC GmbH**
**44801 Bochum (DE)**

(72) Erfinder: **SCHMITT, Philip**
**44801 Bochum (DE)**

(74) Vertreter: **LeoBlu Patentanwälte Rolinec Winter PartG mbB**
**Löwengrube 10**
**80333 München (DE)**

(56) Entgegenhaltungen:
**US-B2- 9 327 962**

• **PHILIP SCHMITT ET AL: "A Micromechanical Binary Counter with MEMS-Based Digital-to-Analog Converter", PROCEEDINGS, vol. 2, no. 13, 21 November 2018 (2018-11-21), pages 807, XP055754777, DOI: 10.3390/proceedings2130807**

**Beschreibung**

**Technischer Bereich der Erfindung**

Die vorliegende Erfindung betrifft eine Vorrichtung und ein Verfahren zur ortsaufgelösten Dehnungsmessung an bestimmten Stellen eines mechanisch beanspruchten Bauelements. Die Erfindung betrifft insbesondere eine Vorrichtung zur mechanischen Dehnungsmessung über zwei Verbindungselemente, deren Verschiebung über einen mechanischen Verstärker verstärkt und über einen elektromechanischen Wandler in eine elektrische Größe gewandelt wird. Die Erfindung betrifft außerdem eine mechanische Maximalwertspeicherung sowie die damit verbundene Möglichkeit einer energieautarken Dehnungsüberwachung.

**Hintergrund und Stand der Technik**

Zur Überwachung stark beanspruchter Bauelemente werden häufig Dehnungsmessstreifen (DMS) eingesetzt. Über DMS lassen sich Dehnungen und Spannungen an bestimmten Stellen eines mechanisch beanspruchten Bauelements lokal aufgelöst bestimmen. DMS sind dehnungssensitive elektrische Widerstände, deren Widerstandswert mit zunehmender Dehnung steigt bzw. bei zunehmender Stauchung sinkt. Über die Messung des Widerstandes lässt sich so die aktuell vorliegende Dehnung äußerst genau bestimmen.

Im Stand der Technik werden Dehnungsmessungen an makroskopischen Bauelementen mit Hilfe von resistiven Dehnungsmessstreifen (DMS) und piezoresistiven Dehnungsmesssystemen durchgeführt.

Bei DMS handelt es sich um meist selbstklebende Streifen mit Halbleiter- oder Metallleiterbahnen, die einen elektrischen Widerstand bilden. Wird der DMS gedehnt oder gestaucht, so verändert sich aufgrund der geometrischen Verformung und der Änderung des spezifischen Widerstandes der Gesamtwiderstand des DMS. Es ergibt sich eine Widerstandsänderung $\Delta R/R$, die sowohl von der Dehnung $\varepsilon$ als auch vom materialspezifischen k-Faktor abhängig ist:

$$\frac{\Delta R}{R} = k \, \varepsilon$$

(Schomburg, 2011)

Für Metalle liegt der k-Faktor in der Größenordnung 1,5 bis 3. Halbleiter erreichen Werte zwischen 20 bis 100 (Schomburg, 2011; Gerlach und Dötzel, 2006). Die Sensitivität der Widerstandsänderung gegenüber der Dehnung ist folglich auch bei sehr hohen Dehnungen von 1% sehr klein.

Da die Widerstandsänderung viel sensitiver auf Temperaturänderungen als auf Dehnungsänderungen reagiert, werden DMS stets in einer "Wheatstone-Messbrücke" verschaltet, um den Temperatureinfluss zu kompensieren. Wird als Messbrücke eine Viertel- oder Halbbrücke eingesetzt, so wird die Dehnungssensitivität jedoch zusätzlich auf ein Viertel bzw. auf die Hälfte reduziert. Zum Auswerten der Widerstandsänderungen bzw. der Brückenspannung ist zudem eine aufwendige analoge Schaltung notwendig. Meist werden Instrumentenverstärker genutzt, um das schwache analoge elektrische Messsignal zu verstärken (Tietze *et al.* 2012). Außerdem muss fast immer eine Offset-Korrektur der Brückenspannung durchgeführt werden, da die Widerstandswerte der Referenzwiderstände in der Messbrücke fertigungsbedingt nicht identisch sind und sich so in der Regel eine Offset-Spannung an der Messbrücke einstellt.

Nähere Einzelheiten zu Dehnungsmessstreifen finden sich im VDI/VDE 2635 Blatt 1 und Blatt 2.

Eine weitere Möglichkeit der Dehnungsmessung besteht in der Anbringung von Faser-Bragg-Gittern am zu dehnenden Bauelement. Hierzu wird ein Lichtstrahl in einen Lichtwellenleiter mit Faser-Bragg-Gitter eingeleitet und am anderen Ende des Leiters spektral analysiert. Über die spektrale Verschiebung der reflektierten Wellenlänge lässt sich Aufschluss über die Längenänderung des Leiters gewinnen (Chen *et al.*; DE 10214984 B4; EP 2294374 B1; DE 102014004544 T5).

Das Funktionsprinzip von Faser-Bragg-Gittern (engl. "fiber Bragg grating", FBG) beruht auf dem Prinzip der Fresnel Reflektion. Hierzu werden in einem Lichtwellenleiter Bereiche mit unterschiedlichen Brechungsindizes erzeugt, die sich vom Brechungsindex der eigentlichen Faser unterscheiden. Diese Bereiche werden i.d.R. in einem periodischen Abstand mit der optischen Länge d = λ/2 angeordnet, wobei sich die einzelnen Bereiche aus je zwei λ/4- breiten Einzelschichten mit unterschiedlichem Brechungsindex zusammensetzen. Licht, das durch den Lichtwellenleiter geführt wird, wird abhängig von der Wellenlänge an den optischen Grenzflächen der modifizierten Bereiche reflektiert. Die Reflektion bestimmter Wellenlängen ergibt sich aus der Phasenverschiebung der reflektierten Lichtwelle um 180° bzw. 0° beim Auftreffen auf eine optische Grenzfläche. Durch die Phasenverschiebung und den λ/4 breiten optischen Schichten kommt es bei der reflektieren Welle mit der Wellenlänge λ zu konstruktiver Interferenz. Die Phasenverschiebung hängt dabei davon ab, ob das Licht zunächst aus einem Bereich mit hohem Brechungsindex kommt und auf einen Bereich mit niedrigem Brechungsindex (0°) stößt oder ob es umgekehrt von einem Bereich mit niedrigem Brechungsindex auf einen Bereich mit hohem Brechungsindex (180°) stößt.

Durch eine Dehnung der Faser werden auch die einzelnen Bereiche der Bragg-Schichten gedehnt, wobei sich die optische Länge ändert. Folglich verändert sich auch die Wellenlänge, für die die Bragg-Bedingung erfüllt wird und die entsprechend reflektiert wird. Über eine Analyse der Verschiebung des Reflexions-/Transmissionsspektrums lässt sich so auf die Dehnung der Faser schließen.

Der besondere Vorteil von FBG-Dehnungssensoren gegenüber DMS besteht in der Unempfindlichkeit gegenüber elektromagnetischen Feldern, die beim DMS eine zusätzliche Störspannung induzieren könnten. Der Nachteil dieser Lösung besteht in der teuren und aufwendigen Analyse des Spektrums. Zudem muss eine Lichtquelle zur Verfügung stehen.

Bei standardisierten Werkstoffprüfversuchen werden zur Bestimmung der Dehnung an Zugproben häufig Extensometer genutzt. Eine Dehnungsmessung erfolgt hier meist optisch und berührungslos und ohne Aufkleben von DMS oder FBG. Zur Bestimmung der Dehnung werden auf der Zugprobe Markierungen vorgesehen, die optisch z.B. über Videoanalyse erfasst werden. Die Verschiebung der Markierungen erlaubt es, Aufschluss über die Dehnung des Prüflings zu erhalten. Alternativ können auch interferometrische Prinzipien zur Dehnungsmessung genutzt werden. Eine Übersicht über die verschiedenen Verfahren bieten Tian et al. (2012) sowie DE 102010038062 B9, DE 102015002452 T5.

Weitere Sensoren zur Dehnungsbestimmung werden in DE 69822097T2 und DE 102016202769 A1 beschrieben.

Bei der Sensoreinheit in DE 69822097T2 handelt es sich um eine Vorrichtung zur Vermessung einer Verschiebung oder Dehnung durch zwei zueinander verschiebbare "Elektrodenarrays". Die Elektrodenarrays tragen eine entsprechende Nonius-Struktur zur hochauflösenden Messung der Verschiebung. Es liegen je nach Verschiebung andere Elektroden übereinander. Die Elektroden an sich berühren sich nicht. Es wird nur eine Ladungsänderung der sich veränderten Kapazitäten der einzelnen Elektroden registriert. Die Veränderung der Ladungen wird mit Hilfe einer elektronischen Auswerteeinheit in ein digitales Signal gewandelt.

Die Nachteile dieser Sensoreinheit bestehen in einem hohen Schaltungsaufwand bei der Digitalisierung der Signale und in der beschränkten Präzision durch Elektrodengröße und Nonius-Struktur. Außerdem ist keine Speicherung des erreichten Maximalwerts und keine energieautarke Überwachung möglich.

Die DE 102016202769 A1 offenbart einen Sensor zur integralen oder ortsaufgelösten Messung von Dehnungen basierend auf vorgeschädigten Kohlefasern. Die Kohlefasern sind in einer ausgehärteten Matrix eingebettet und werden von zwei Seiten elektrisch kontaktiert. Durch die Dehnung der Kohlefasern verändert sich der elektrische Widerstand. Wird die Bruchspannung einzelner Kohlefasern bei der Dehnung erreicht, so steigt der Widerstand erheblich an. Der erreichte Maximalwert der Dehnung lässt sich so passiv speichern. Jedoch gibt es keine Möglichkeit, den gespeicherten Maximalwert wieder zurückzusetzen.

Eine passive Vorrichtung zum Zählen von Dehnungsüberschreitungen wird in der EP 2 705 330 B1 offenbart. Hierbei handelt es sich um eine dreidimensionale Messvorrichtung zur Befestigung an einem Prüfobjekt über zwei Fixierungspunkte. Durch Überschreiten eines festgelegten Dehngrenzwertes wird die Anzahl der Dehnzyklen über einen zahnradbasierten Mechanismus gezählt. Es erfolgt jedoch keine Erfassung der maximal erreichten Dehnung. Ein Zahnrad basierter Mechanismus ist zudem stets mit Spiel behaftet, wodurch eine kontinuierliche Dehnungsmessung verfälscht wird.

PHILIP SCHMITT ET AL: "A Micromechanical Binary Counter with MEMS-Based Digital-to-Analog Converter",PROCEEDINGS, Bd. 2, Nr. 13, 21. November 2018, Seite 807, sowie US 9 327 962 B2 offenbaren beide mikromechanische Messsysteme zur Messung von Dehnungen an einem Messobjekt, die einen Kompensationsmechanismus umfassen, der dazu ausgelegt ist, thermisch induzierte Dehnungen und/oder isotrop wirkende Dehnungen an einem Messobjekt zu kompensieren. In PHILIP SCHMITT ET AL sind piezoresistive Dehnungsmessstreifen so auf Federn ("Führungsfedern") positioniert, dass sie eine Wheatstone-Brücke bilden, während US 9 327 962 B2 ein MEMS mit einer mikromechanischen Kompensationsstruktur offenbart, wobei die Kompensationsstruktur in denselben Chip des MEMS integriert ist und eine Vielzahl sogenannter Kompensationselektroden in einer zu festen Sensorelektroden symmetrischen Position umfasst.

## Zusammenfassung der Erfindung

Die Überwachung kritischer Bauelemente mittels DMS erlaubt ein kontinuierliches Monitoring der auftretenden Beanspruchungen. Häufig sind insbesondere für Wartungszwecke allerdings nur die maximal erreichten Dehnungsspitzen von Interesse, sodass die kontinuierlich erfassten Daten meist gar nicht benötigt und damit verworfen werden. Zudem ist eine Bauteilüberwachung mittels DMS äußerst aufwendig, da die DMS zur Temperaturkompensation in einer Messbrücke verschaltet werden und die Signale an den Messbrücken aufbereitet werden müssen. So ist neben der elektrischen Verstärkung der Brückenspannung und der Offset-Korrektur auch noch die Digitalisierung und häufig auch die Speicherung der Messergebnisse erforderlich. Ferner ist für die Messung eine Spannungsversorgung notwendig, die eine Verkabelung der DMS und der Auswerteelektronik mit sich bringt.

Eine Aufgabe der vorliegenden Erfindung bestand deshalb darin, als Alternative zu klassischen widerstandsbasierten DMS ein neuartiges mikromechanisches System bereitzustellen, das vollkommen energieautark eine kontinuierliche mechanische Bauteilüberwachung zulässt.

Eine weitere Aufgabe der vorliegenden Erfindung bestand darin, mit einem solchen mikromechanischen System eine mechanische Maximalwertspeicherung zu gewährleisten und dadurch eine energieautarke Dehnungsüberwachung zu ermöglichen.

Ähnlich wie DMS, können die hier vorgestellten Mikrosysteme in Form eines Chips zur lokalen Dehnungsüberwachung auf einer Probe befestigt werden, um so die aktuell vorliegende Dehnung oder auch die maximal auftretende Dehnung zu messen und zu speichern. Eine Widerstandsbrücke mit entsprechender Verstärkerschaltung mit Offsetkorrektur sowie ein elektronischer A/D-Wandler ist bei diesem Prinzip nicht erforderlich. Die Messung der Dehnung erfolgt rein mechanisch, sodass elektrische parasitäre Effekte wie thermisches Rauschen im Gegensatz zum resistiven DMS nur eine geringfügige Rolle spielen.

Das erfindungsgemäße mikromechanische System hat den Vorteil gegenüber bestehenden Dehnungsmesssystemen, dass keine kontinuierliche Spannungsversorgung für die Dauerüberwachung mittels Maximalwertspeicher notwendig ist und das System vollkommen energieautark eingesetzt werden kann. Es ist keine aufwendige elektrische Verstärkerschaltung und keine Verschaltung in einer Messbrücke notwendig, somit auch kein Abgleichen von Widerständen. Im System erfolgt eine direkte Diskretisierung und Digitalisierung der Messwerte in der mechanischen Domäne. Da es sich bei der Dehnungserfassung um ein rein mechanisches Prinzip handelt, gibt es keine parasitären elektrischen Effekte (wie z.B. thermisches Rauschen).

Das erfindungsgemäße System ist außerdem günstig in der Herstellung, da diese vorzugsweise auf einer standardisierten SOI-Technologie (mit vielen Chips pro Wafer) beruht. Da im Wesentlichen nur Silicium und Metalle, Gläser oder Keramiken bei der Herstellung verwendet werden, ist das System temperaturstabil und umweltschonend. Für die mechanische Verbindung des Systems mit einem Prüfobjekt bestehen viele verschiedene Möglichkeiten; z.B. durch Löten, Schweißen, Verkleben, Bonden.

Die beschriebenen technischen Aufgaben werden durch die Vorrichtungen bzw. Verfahren gemäß den unabhängigen Ansprüchen der aktuellen Erfindung gelöst. Die abhängigen Ansprüche beschreiben bevorzugte Ausführungsformen. Wertebereiche, die durch numerische Werte begrenzt sind, sollen stets die besagten Grenzwerte beinhalten.

**Beschreibung der Zeichnungen**

**Fig. 1:** Komponenten des mikromechanischen Dehnungsmesssystems und Anbindung an ein Messobjekt

**Fig. 2:** Anbindung des mikromechanischen Dehnungsmesssystems an einem Messobjekt bzw. an einer Zugprobe

**Fig. 3:** Darstellung der direkten Verbindung des mikromechanischen Dehnungsmesssystems mit einem Messobjekt

**Fig. 4:** Darstellung der indirekten Verbindung des Dehnungssensors mit einem Messobjekt über ein flexibles Gehäuse

**Fig. 5:** Technisches Prinzip des mikromechanischen Dehnungsmesssystems

**Fig. 6:** Technisches Prinzip des mikromechanischen Dehnungsmesssystems mit Maximalwertspeicher

**Fig. 7:** Technisches Prinzip eines Kompensationsmechanismus zur Trennung sich überlagernder isotroper und axialer Dehnungen an einem Messobjekt: A) Darstellung des Wirkprinzips des Kompensationsmechanismus (14) bei einer isotrop wirkenden Ausdehnung des Messobjektes (12). B) Darstellung des Wirkprinzips des Kompensationsmechanismus bei uniaxialer Dehnung des Messobjektes.

**Fig. 8:** Technisches Prinzip des mikromechanischen Dehnungsmesssystems mit Kompensationsmechanismus

**Fig. 9:** Technisches Prinzip eines einstufigen mechanischen Verstärkers bestehend aus mehreren seriell verbundenen Hebeln mit den Segmentlängen a, b, c, d

**Fig. 10:** Technisches Prinzip eines mehrstufigen mechanischen Verstärkers mit der Eingangsverschiebung $y_{in}$ und der ausgangsseitigen Verschiebung $y_{out}$

**Fig. 11:** Technisches Prinzip eines einstufigen mechanischen Verstärkers mit implementierter Übertragungsfunktion

**Fig. 12:** Darstellung des ausgelenkten mechanischen Verstärkers mit implementierter Übertragungsfunktion

**Fig. 13:** Ausführungsbeispiel eines Dehnungssensors mit einem kapazitiven elektromechanischen Wandler

**Fig. 14:** Ausführungsbeispiel eines Aufbaus für einen kontaktbasierten elektromechanischen Wandler mit binärer Codierung

**Fig. 15:** Darstellung eines kontaktbasierten elektromechanischen Wandlers im ausgelenkten Zustand, wobei ein binäres Signal 1-0 (dezimal 2) generiert wird.

**Fig. 16:** Ausführungsbeispiel für die Anordnung der Gegenelektroden bei einem kontaktbasierten elektromechanischen Wandler mit a) überlappenden Gegen- und Fingerelektroden und b) Gegenelektroden, die einen geringen Abstand zu den Fingerelektroden aufweisen, jedoch über eine elektrostatische Kraft an die Fingerelektrode hin angezogen werden und diese kontaktieren.

**Fig. 17:** Ausführungsbeispiel eines bi-direktionalen elektromechanischen Wandlers in paralleler Kammanordnung mit implementiertem Gray-Code und zusätzlichem Vorzeichenzweig sowie Darstellung der parallel codierten Ausgangssignale in einer Wertetabelle.

**Fig. 18:** Ausführungsbeispiel eines kontaktbasierten elektromechanischen Wandlers mit Dezimaler Codierung.

**Fig. 19:** Ausführungsbeispiel für einen kontaktbasierten elektromechanischen Wandler mit Unär-Codierung.

**Fig. 20:** Ausführungsbeispiel eines mikromechanischen Dehnungsmesssystems, wobei der elektromechanische Wandler als kontaktbasierter Wandler mit Unär-Codierung ausgeführt ist.

**Fig. 21:** Ausführungsbeispiel eines mikromechanischen Dehnungsmesssystems, wobei der elektromechanische Wandler in einer parallelen Kammstruktur als bi-direktionaler kontaktbasierter Wandler mit Gray-Codierung ausgeführt ist.

**Fig. 22:** Ausführungsbeispiel eines elektromechanischen Wandlers in einer parallelen Kammstruktur als bi-direktionaler kontaktbasierter Wandler mit Gray-Codierung und implementierter Übertragungsfunktion sowie mit bi-direktionalem mechanischen Maximalwertspeicher.

**Fig. 23:** Technisches Prinzip eines mechanischen Maximalwertspeichers

**Fig. 24:** Technisches Prinzip eines kaskadierten mechanischen Maximalwertspeichers mit Zwischenpositionen

**Fig. 25:** Schaltabfolge eines kaskadierten mechanischen Maximalwertspeichers

**Fig. 26:** Kaskadierter Maximalwertspeicher mit elektrostatischem Rückstellmechanismus. A) Möglicher Aufbau des Rückstellmechanismus. B) Lösevorgang der Sperrklingen beim Zurücksetzen des Maximalwertspeichers

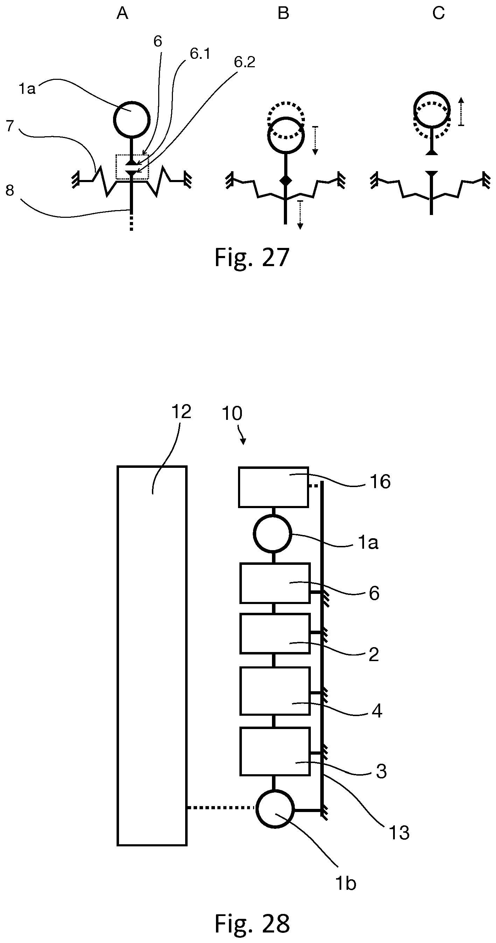

**Fig. 27:** Ausführungsbeispiel einer mechanischen Kupplung (6). A) Kupplung im initialen Zustand nach der Fertigung. Das Verbindungselement (1a) befindet sich in seiner initialen Position. Weiterhin sind die Stößel (6.1, 6.2) mechanisch voneinander getrennt, sodass keine Verschiebung des Verbindungselements auf den Läufer übertragen wird. B) Verbindungselement im ausgelenkten Zustand nach unten in Wirkrichtung. Die Verschiebung wird über die Kupplung an den Läufer übertragen. Über den Maximalwertspeicher wird die Läuferposition diskret fixiert. C) Verschiebung des Verbindungselements nach oben, woraufhin die Stößel der Kupplung ihren mechanischen Kontakt verlieren und die Kraftübertragung auf den Läufer unterbrochen wird. Der Läufer verharrt so weiterhin in seiner in (B) erreichten Position.

**Fig. 28:** Ausführungsbeispiel des mikromechanischen Messsystems mit Anbindung eines mechanischen Eingangswandlers (16) zur Erfassung weiterer physikalischer Messgrößen.

**Fig. 29:** Ausführungsbeispiel des Messsystems mit Anbindung einer seismischen Masse (16.1) als Beispiel für einen mechanischen Eingangswandler (16).

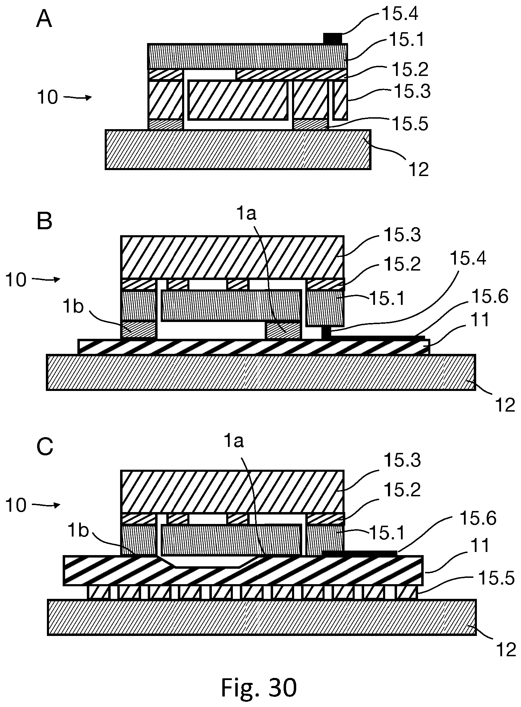

**Fig. 30:** Ausführungsbeispiele für einen möglichen technologisch umgesetzten Schichtaufbau des Dehnungssensors (10). A) Schichtaufbau, bei dem die mechanische direkte Verbindung zwischen Dehnungssensor und Messobjekt (12) über den Handlelayer erfolgt und dieser ebenfalls strukturiert ist. B) Schichtaufbau, bei dem der Handlelayer unstrukturiert ist und die Verbindung zwischen Dehnungssensor und Messobjekt über den Devicelayer erfolgt. Weiterhin zeigt B) eine indirekte Verbindung zwischen Dehnungssensor und Messobjekt über ein flexibles Gehäuse (11), über welches auch die elektrische Verbindung nach außen geführt wird. C) Schichtaufbau, bei dem der Handlelayer unstrukturiert ist und die Verbindung zwischen Dehnungssensor und Messobjekt über ein strukturiertes flexibles Gehäuse (11) realisiert wird, wobei das flexible Gehäuse Kavitäten aufweist und die stoffschlüssige Verbindung des Gehäuses mit den Verbindungselementen (1a, 1b) über Anodisches-, Eutektisches oder Fusionsbonden realisiert ist.

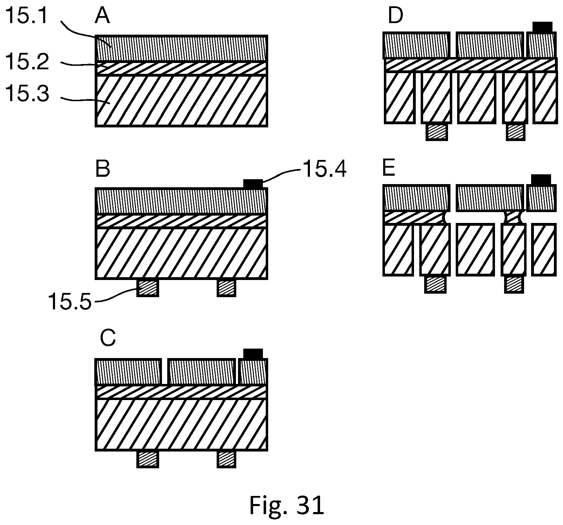

**Fig. 31:** Darstellung des Herstellungsverfahrens über ein SOI-Substrat. A) SOI-Substrat, B) Abgeschiedene und strukturierte Ebene eines Verbindungsmaterials (15.5) an Handlelayer (15.3) zur Verbindung des Dehnungssensors mit einem Messobjekt. Ferner zeigt B) eine abgeschiedene und strukturierte Elektrodenebene (15.4) auf dem Devicelayer (15.1) des SOI-Substrats. C) Anisotrop tiefgeätzte Strukturierung der mechanischen Komponenten am Devicelayer. D) Tiefgeätzte Strukturierung des Handlelayers zur Freistellung der Verbindungselemente. E) Freigestellte mechanische Strukturen am Device- und Handlelayer nach Entfernung der Opferschicht über beispielsweise Flusssäure.

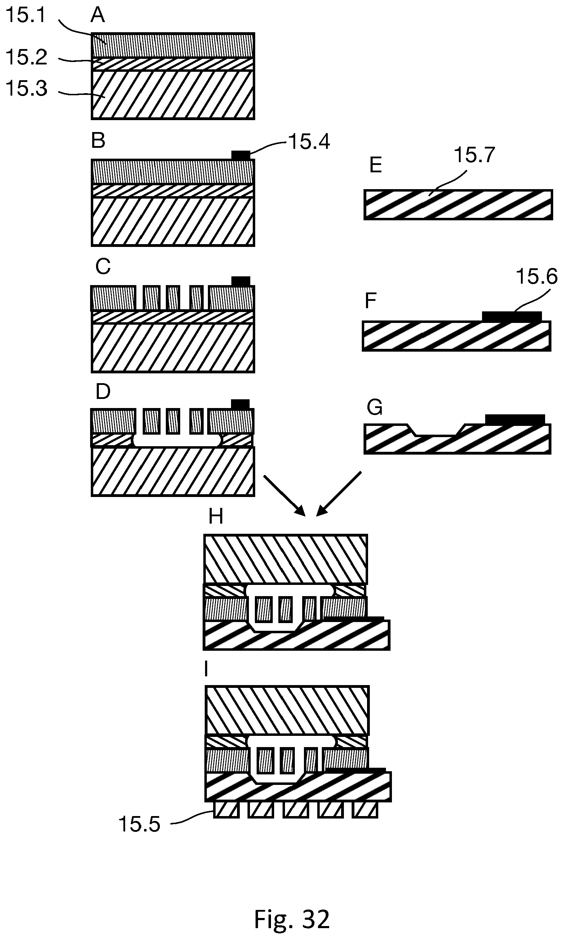

**Fig. 32:** Darstellung des Herstellungsverfahrens über ein SOI-Substrat und ein weiteres Substrat das als flexibles Gehäuse dient. A) SOI-Substrat, B) Abgeschiedene und strukturierte Elektrodenmaterials (15.4) auf dem Devicelayer (15.1), C) Strukturierung durch Tiefätzen des Devicelayers (15.1) zur Umsetzung der mechanischen Strukturen des Dehnungssensors, D) Freigestellte mechanischer Strukturen am Devicelayer nach Entfernung der Opferschicht über beispielsweise Flusssäure, E) Substrat des flexiblen Gehäuses, F) Abscheidung und Strukturierung von vom Dehnungssensor auf das Gehäuse herausgeführte Elektroden, G) Strukturierung der Oberfläche des Substrats des flexiblen Gehäuses (15.7) beispielsweise über Ätzen, H) Verbindung des SOI-Substrats mit dem Substrat des flexiblen Gehäuses beispielsweise über Bonden, I Abscheidung und optionale Strukturierung eines Verbindungsmaterials (15.5) zur stoffschlüssigen Verbindung des Dehnungssensors mit einem Messobjekt, wobei das Verbindungsmaterial vorzugsweise ein Lot und/ oder ein Schichtstapel reaktiver Metallschichten oder einen Klebstoff beinhaltet.

**Ausführliche Beschreibung der Erfindung**

Bevor die Erfindung im Detail beschrieben wird, wird darauf hingewiesen, dass diese Erfindung nicht begrenzt ist auf bestimmte Bestandteile der beschriebenen Vorrichtungen, oder beschrieben Herstellungsschritte der Verfahren, da diese Verfahren bzw. Vorrichtungen variieren können. Es wird auch darauf hingewiesen, dass die Terminologie hierfür nur zum Zweck für bestimmte beschriebene Ausführungsformen benutzt wird, und nicht absichtlich begrenzt ist. Der Schutzumfang der Erfindung wird durch die angehängten Ansprüche definiert.

Es soll angemerkt werden, dass in der Beschreibung und in den anhängenden Ansprüchen die einfache Form wie "ein/eine" oder "der/die/das" einen singulären und/oder pluralen Gegenstand beinhaltet, außer wenn es im Kontext klar anders formuliert ist. Für den Fall, dass ein Parameterbereich angegeben wurde, zählen die begrenzenden Zahlenwerte als Grenzwerte zum offenbarten bzw. beanspruchten Zahlenbereich dazu.

Die vorliegende Erfindung betrifft ein mikromechanisches Dehnungsmesssystem, das es ermöglicht, Dehnungen an beanspruchten Bauelementen oder Zugproben lokal aufgelöst zu bestimmen. Die Dehnungsmessungen können sowohl für eine kontinuierliche Überwachung von wartungsintensiven Bauelementen eingesetzt werden als auch für klassische Versuche der Werkstoffprüfung (Zugversuch, Schwingfestigkeitsversuch). Das erfindungsgemäße Dehnungsmesssystem erlaubt bei kontinuierlicher Energieversorgung eine kontinuierliche Messung und Abfrage der aktuell vorliegenden Dehnung an einer Probe. Dabei liefert der Sensor bereits ein diskretes oder digitales, vorzugsweise elektrisches Signal. Weiterhin kann das erfindungsgemäße Dehnungsmesssystem so ausgeführt werden, dass es auch ohne elektrische Energieversorgung kontinuierlich die Dehnung an einem Bauelement überwacht und den maximal erreichten Dehnungswert in einem mechanischen Speicher abspeichert. Elektrische Energie ist hierzu nicht erforderlich. Der gespeicherte Messwert kann später zu einem beliebigen Zeitpunkt elektronisch, z.B. über RFID ("radio-frequency identification") abgefragt werden. Weiterhin kann das erfindungsgemäße Dehnungsmesssystem so ausgeführt werden, dass es möglich ist, den mechanischen Maximalwertspeicher im Chip durch einen elektrischen Impuls zu löschen, um den Sensor so zurückzusetzen.

Die vorliegende Erfindung betrifft ein mikromechanisches Messsystem zur Messung von Dehnungen an einem Messobjekt umfassend mindestens zwei Verbindungselemente zur Einkopplung des Dehnungssignals vom Messobjekt in das mikromechanische Messsystem; einen mechanischen Verstärker; einen elektromechanischen Signalwandler; und einen mechanischen Kompensationsmechanismus, der dazu ausgeführt ist, die isotrope Wärmeausdehnung eines Messobjektes rein mechanisch zu kompensieren und von einem uniaxialen Dehnungssignal des Messobjektes zu entkoppeln, sodass temperaturunabhängige Dehnungsmessungen ermöglicht werden, wobei der Kompensationsmechanismus mindestens ein zusätzliches flexibel gelagertes Verbindungselement und mindestens einen Umlenkmechanismus umfasst, der dazu ausgeführt ist, eine Verschiebung des Verbindungselements in seitlicher Richtung in eine Verschiebung in Längsrichtung zu transformieren, und weiterhin mindestens einen Krafttransformator umfasst, der dazu ausgeführt ist, die jeweilige Verschiebung der Verbindungselemente in eine Kraft (F) umzuwandeln, wobei bei isotroper Ausdehnung des Messobjektes die seitliche Verschiebung der zusätzlichen Verbindungselemente über den Umlenkmechanismus in eine Längsverschiebung transformiert und über den Krafttransformator in eine Kraft (F1) in Längsrichtung (y-Richtung) gewandelt wird, und eine zur Kraft (F1) betragsmäßig gleiche, aber entgegengesetzte Kraft (F2) über mindestens eins der flexibel gelagerte Verbindungselemente und den zugehörigen Krafttransformator generiert wird, wobei das flexibel gelagerte Verbindungselement über den zugehörigen Krafttransformator mit einem Eingang des Verstärkers verbunden ist, sodass sich die resultierende Kraft kompensiert und keine Verschiebung (yin) an den angeschlossenen mechanischen Verstärker übertragen wird, während zusätzliche mechanisch induzierte axiale Dehnung in Längsrichtung (y-Richtung) an den mechanischen Verstärker weitergeleitet und infolgedessen verstärkt wird.

Unter "Verbindungselementen" im Sinne der vorliegenden Erfindung sind Vorrichtungen und Bauelemente zu verstehen, die der Verbindung zwischen dem mikromechanischen Messsystem und dem zu untersuchenden Bauelement dienen. Die Verbindungselemente haben am Messsystem fest definierte Positionen und Abstände. Mindestens ein Verbindungselement ist fest mit dem Substrat des Mikrosystems verbunden, während mindestens ein weiteres translatorisch gegenüber dem Substrat verschiebbar ist.

Unter einem "mechanischen Verstärker" im Sinne der vorliegenden Erfindung wird ein Bauteil verstanden, dessen Aufgabe darin besteht, eine initial geringe translatorische Verschiebung in eine translatorische Verschiebung mit hoher Amplitude zu wandeln, um so eine sensitive Auflösung der Dehnung zu ermöglichen.

Unter einem "elektromechanischen Signalwandler" im Sinne der vorliegenden Erfindung wird ein Bauteil verstanden, dessen Aufgabe darin besteht, die Verschiebung am Ausgang des Verstärkers mechanisch zu diskretisieren und in ein diskretes, vorzugsweise binär codiertes elektrisches Signal zu wandeln.

Unter einem "mechanischen Maximalwertspeicher" im Sinne der vorliegenden Erfindung wird eine Vorrichtung oder ein Bauteil verstanden, dessen Aufgabe darin besteht, die maximal erreichte Dehnung in diskreten Schritten mechanisch zu speichern. Auf diese Weise lässt sich eine kontinuierliche Dehnungsüberwachung durchführen, ohne dass kontinuierlich eine Spannungsversorgung verfügbar sein muss. Der am Maximalwertspeicher gespeicherte Dehnungswert wird dabei stets überschrieben, sofern eine höhere Dehnungsamplitude registriert wird als zuvor gespeichert wurde.

Unter einem "makroskopischen Objekt" im erfindungsgemäßen Sinne wird ein Objekt verstanden dessen kleinste geometrische Abmessungen größer als die der erfindungsgemäßen Messvorrichtung sind. Unter einem "Messobjekt" im erfindungsgemäßen Sinne versteht man jegliche Objekte, Gegenstände oder Bauteile, die einer Dehnungsmessung oder Dehnungsüberwachung unterzogen werden können oder sollen.

Unter einem "flexiblen Gehäuse" im erfindungsgemäßen Sinne wird ein Bauteil verstanden, das im Vergleich zum Messobjekt ein geringes Elastizitätsmodul aufweist und das dazu ausgeführt ist, die Dehnung des Messobjektes mit vernachlässigbarem Widerstand an die Verbindungselemente des Dehnungssensors zu übertragen.

Unter einem "Substrat des mikromechanischen Dehnungsmesssystems" im erfindungsgemäßen Sinne wird das mechanische Gestell des Dehnungssensors verstanden, d.h. eine Vorrichtung, die als Träger und/oder zur Befestigung dient.

Unter einer "Opferschicht" im erfindungsgemäßen Sinne wird eine für die Fertigung des Dehnungssensors benötigte Materialebene verstanden, welche den Devicelayer und den Handlelayer mechanisch miteinander verbindet und die zur Freistellung der beweglichen Strukturen am Devicelayer partiell entfernt wird.

Unter "axialer Dehnung" oder "axial wirkender Dehnung" im erfindungsgemäßen Sinne wird die Richtung einer Dehnung entlang der sensitiven Achse des erfindungsgemäßen Dehnungssensors verstanden in deren Richtung die Dehnungswirkung erfasst werden soll.

Unter einem "Kompensationsmechanismus" im erfindungsgemäßen Sinne wird ein Bauteil verstanden, das dazu ausgeführt ist bei einer Überlagerung von isotrop und axialer Dehnungen die isotrop wirkende Dehnung zu kompensieren und von der axial wirkenden Dehnung zu separieren.

Unter einem "mechanischen Eingangswandler" im erfindungsgemäßen Sinne wird ein Bauteil verstanden, das dazu ausgeführt ist eine zu messende physikalische Größe in eine Verschiebungs- oder Dehnungsgröße zu wandeln die wiederum eine relative Verschiebung der gestellfesten (1b) und flexiblen Verbindungselemente (1a) hervorruft.

Unter einer "passiven" Messung/ Wandlung oder einem "passiven" Bauelement im erfindungsgemäßen Sinne wird ein Verfahren oder eine Vorrichtung verstanden, bei dem keine aktive Leistungs- oder Energieverstärkung eines Ausgangssignals erfolgt.

Unter einer "energieautarken" Messung oder einem "energieautarken" Speichern im erfindungsgemäßen Sinne wird ein Verfahren verstanden, bei dem eine Messung und/ oder Speicherung einer physikalischen Größe ohne zusätzliche externe Hilfsenergie erfolgt. Die Energie für die Messung und/ oder Speicherung wird direkt aus der Energie des Messsignals bezogen.

Bei einer bevorzugten Ausführungsform der vorliegenden Erfindung sind die Verbindungselemente (1a, 1b) des mikromechanischen Messsystems in einem bekannten Abstand am Messsystem angeordnet, wobei mindestens ein Verbindungselement gestellfest mit dem Substrat des Messsystems verbunden ist und mindestens ein weiteres federgelagert translatorisch oder rotatorisch verschiebbar am Messsystem gelagert ist. Dabei kann es mechanisch direkt oder indirekt über eine Kupplung mit dem mechanischen Verstärker verbunden sein.

Bei einer bevorzugten Ausführungsform der vorliegenden Erfindung wandelt der mechanische Verstärker (2) eine eingangsseitige translatorische Bewegung ausgangsseitig in eine verstärkte ebenfalls translatorische Verschiebung um. Dabei ist der Verstärker dazu ausgeführt, eine Wegverstärkung mit entweder konstantem Verstärkungsfaktor oder eine Wegverstärkung mit einer dehnungsabhängigen Verstärkung durchzuführen. Dabei ist der mechanische Verstärker dazu ausgeführt, eine vordefinierte Übertragungsfunktion der Verstärkung in Abhängigkeit der eingangsseitigen translatorischen Verschiebung umzusetzen und auf das ausgangsseitige Verschiebungssignal anzuwenden.

Dabei kann am Ausgang des mechanischen Verstärkers die dehnungsinduzierte verstärkte Verschiebung in eine digitale oder analoge elektrische Größe umgewandelt werden, insbesondere über einen elektromechanischen Wandler.

Bei einer bevorzugten Ausführungsform der erfindungsgemäßen Vorrichtung ist der elektromechanische Wandler in Form eines elektromechanischen Analog-Digital Wandlers (3) ausgeführt, der dazu ausgebildet ist eine Verschiebung am Ausgang des Verstärkers in ein diskretes binär codiertes paralleles elektrisches Spannungssignal zu überführten. Vorzugsweise handelt es sich bei dem ausgegebenen Binär-Code um Dual-Code, Gray-Code, BCD-Code, Unär-Code, Aiken-Code, Libaw-Craig-Code oder Summen-Code, aber auch andere binäre Codierungen sind denkbar.

Eine weitere Ausführungsform des erfindungsgemäßen mikromechanischen Messsystems sieht vor, dass über den mikromechanischen Verstärker und/ oder über den elektromechanischen Wandler eine vordefinierte Übertragungsfunktion auf das primäre Messsignal am Eingang des Verstärkers bzw. des elektromechanischen Wandlers angewandt wird.

Bei einer besonders bevorzugten Ausführungsform der vorliegenden Erfindung ist das mikromechanische Messsystem so ausgestaltet, dass die maximal erreichte Verschiebung am Ausgang des mechanischen Verstärkers durch einen mehrstufigen Rastmechanismus fixiert werden kann.

Das erfindungsgemäße mikromechanische Messsystem kann so ausgestaltet sein, dass es auch ohne kontinuierliche elektrische Energieversorgung eine autonome kontinuierliche Dehnungsmessung des Messobjektes durchführt und den maximal erreichten Dehnungswert in Form einer fixierten Verschiebung über einen mechanischen rastzahnbasierten Maximalwertspeicher speichert.

Erfindungsgemäß wird ein Kompensationsmechanismus (14) am Messsystem, insbesondere am flexiblen Verbindungselement (1a) implementiert, der dazu ausgeführt ist eine mögliche thermisch induzierte isotrope Dehnung am Messobjekt (12) zu kompensieren und von einem axial wirkenden Dehnungssignal zu entkoppeln.

Neben der energieautarken und passiven Messung, Speicherung, Diskretisierung und Digitalisierung von Dehnungen an einem Messobjekt lässt sich das mikromechanische Messsystem um einen mechanischen Eingangswandler (16) erweitern, um anstelle der Dehnung an einem Prüfobjekt weitere physikalische Messgrößen insbesondere Beschleunigung, Spannung, Strom, magnetische Feldstärke, elektrische Feldstärke oder Feuchtigkeit zu erfassen, zu speichern und/ oder zu diskretisieren und zu digitalisieren.

Die vorliegende Erfindung betrifft ferner ein Verfahren zur Herstellung eines mikromechanischen Messsystems gemäß der vorliegenden Erfindung, umfassend mindestens die folgenden Schritte:

(i) Bereitstellen einer Trägerschicht, die als Gestell fungiert ("Handlelayer"), und
(ii) Aufbringen einer weiteren Schicht ("Devicelayer"), die die mechanischen und elektromechanischen Komponenten des mikromechanischen Messsystems enthält.

Die Verbindungselemente (1a, 1b) können am "Handlelayer" und/oder am "Devicelayer" angebracht sein.

Bei einer bevorzugten Ausführungsform dieses Herstellungsverfahrens enthalten der "Handlelayer" und der "Devicelayer" Silizium und/oder eine dazwischen liegende weitere Schicht ("BOX-Layer") Siliziumdioxid, die als Opferschicht fungiert.

Bei einer bevorzugten Ausführungsform wird die Herstellung des mikromechanischen Messsystems gemäß der vorliegenden Erfindung mittels Lithographie und/oder durch anisotropes Ätzen durchgeführt.

Das mikromechanischen Messsystem kann in Form eines Silicium-Chips ausgeführt sein.

Bei einer bevorzugten Ausführungsform wird die Herstellung des mikromechanischen Messsystems dahingehend erweitert, dass mindestens die Verbindungselemente (1a, 1b) stoffschlüssig mit einem weiteren Substrat verbunden werden, dass als flexibles Gehäuse (11) dient. Zur stoffschlüssigen Verbindung des besagten mikromechanischen Messsystems mit einem Messobjekt (12) kann zudem an der Oberfläche des flexiblen Gehäuses (11) oder direkt an den Verbindungselementen ein Lot und/ oder reaktive Metallschichten und/ oder ein Klebstoff abgeschieden und strukturiert werden.

Gegenstand der vorliegenden Erfindung ist weiterhin ein Verfahren nach Anspruch 7.

Das erfindungsgemäße Verfahren kann zwischen besagten Schritten (iv) und (v) einen weiteren Schritt umfassen, nämlich die Speicherung des erreichten Maximalwerts der Dehnung in einem mechanischen Maximalwertspeicher.

Das erfindungsgemäße Verfahren kann derart ausgestaltet sein, dass eine autonome kontinuierliche Dehnungsmessung des Messobjektes ohne kontinuierliche elektrische Energieversorgung durchgeführt und der maximal erreichte Dehnungswert in Form einer fixierten Verschiebung über einen mechanischen rastzahnbasierten Maximalwertspeicher gespeichert wird.

Das erfindungsgemäße Verfahren kann zwischen besagten Schritten (i) und (ii) einen weiteren Schritt umfassen bei dem eine uniaxiale Dehnung in Richtung der sensitiven Messachse des Dehnungssensor von einer überlagernden isotrop wirkenden Dehnung des Messobjektes über einen Kompensationsmechanismus entkoppelt wird und nur die uniaxiale Dehnung an den mikromechanischen Verstärker übertragen wird.

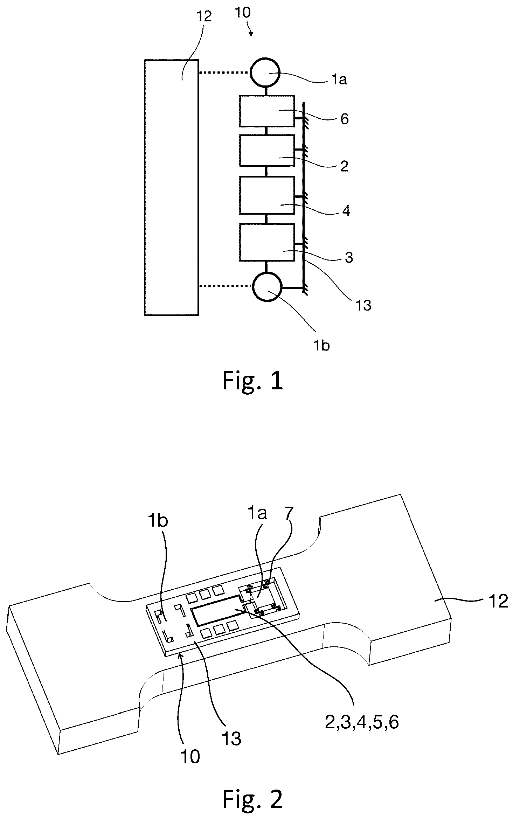

Fig. 1 zeigt die Hauptkomponenten des mikromechanischen Dehnungsmesssystems (10) sowie deren Anordnung umfassend mindestens zwei Verbindungselemente (1a, 1b), wobei ein Verbindungselement (1b) gestellfest mit dem Substrat des mikromechanischen Dehnungsmesssystems (13) verbunden ist und mindestens ein weiteres Verbindungselement gegenüber dem Substrat des mikromechanischen Dehnungsmesssystems (13) flexibel gelagert ist und der geometrische Abstand aller Verbindungselemente zueinander bekannt ist. Die Verbindungselemente stellen eine mechanische Kopplung zwischen mikromechanischem Dehnungsmesssystem (10) und Messobjekt (12) her. Weiterhin umfasst das mikromechanische Dehnungsmesssystem einen mechanischen Verstärker (2) sowie einen elektro-mechanischen Signalwandler (3). Zum Speichern der maximal erreichten Dehnung umfasst der Dehnungssensor zudem in einer erweiterten Ausführung eine Kupplung (6) und einen mechanischen Maximalwertspeicher (4). Die Reihenfolge und Anordnung der Hauptkomponenten können variieren.

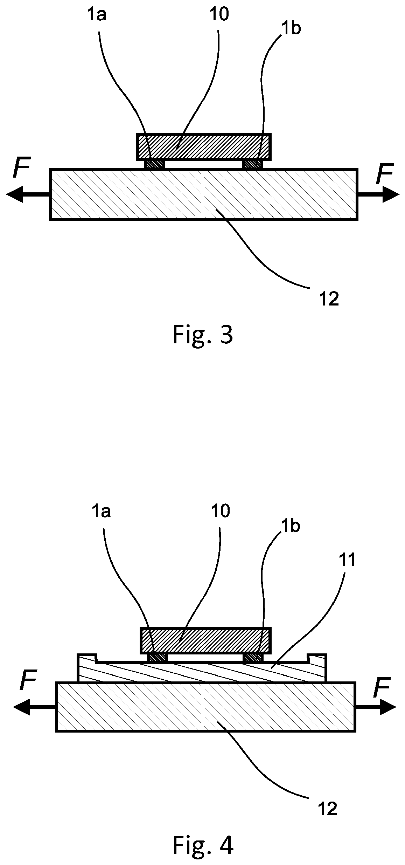

Die Anwendung und Handhabung des mikromechanischen Dehnungsmesssystems ähnelt der eines DMS. Der Dehnungssensor (10) wird, wie in Fig. 2 gezeigt, in Form eines Chips an die zu untersuchende Oberfläche eines Messobjektes (12) formschlüssig geklebt/gefügt. Dabei wird der Chip über mind. zwei definierte Punkte, den Verbindungselementen (1a, 1b), mit dem Werkstück verbunden. Der Abstand der Verbindungselemente (1a, 1b) zueinander ist hierbei genau bekannt und wird über eine Geometrie am Chip festgelegt. Mindestens eine der Verbindungselemente ist weich über Federelemente am Chip gelagert (1a) und lässt sich unter geringem Kraftaufwand translatorisch oder rotatorisch verschieben. Der andere Verbindungspunkt (1b) ist starr und gestellfest mit dem Substrat/Gestell des Chips verbunden. Weiterhin sind beide Verbindungselemente mechanisch mit dem Messobjekt (12) verbunden, wie in Fig. 3 gezeigt.

Denkbar ist auch, dass der Chip nicht unmittelbar am Messobjekt (12) montiert wird, sondern wie in Fig. 4 gezeigt indirekt über ein flexibles Gehäuse (11). Im einfachsten Fall kommt hierzu eine flexible Leiterkarte in Frage, auf der das mikromechanische Dehnungsmesssystem (10) über die zwei Verbindungselemente (1a,1b) montiert wird. Das flexible Gehäuse (11) wird wiederum am Messobjekt (12) befestigt. So nimmt das flexible Gehäuse zunächst die Dehnung des Messobjektes (12) auf und überträgt diese dann an den eigentlichen Dehnungssensor. Das Gehäuse ist eine vorteilhafte Erweiterung, um den mechanische Dehnungssensor vor Schmutz oder Feuchtigkeit zu schützen oder um die Montage der Baugruppe "Dehnungssensor und Gehäuse" z.B. durch großflächige Klebeflächen zu optimieren.

Als Material für das flexibles Gehäuse kommen insbesondere Glas, Silicium, Keramik oder Glaskeramik-Substrate in Frage. In einer bevorzugten Ausführungsform wird für das flexible Gehäuse ein dünnes flexibles Substrat mit an Silicium angepasstem Wärmeausdehnungskoeffizient oder mit einem besonders geringem oder vernachlässigbar kleinen Wärmeausdehnungskoeffizient genutzt. Auch die Nutzung eines Materials mit an das Messobjekt (12) angepasstem Wärmeausdehnungskoeffizient ist denkbar. Das mikromechanische Dehnungsmesssystem (10) lässt sich vorzugsweise über Anodisches-, Eutektisches- oder Fusionsbonden mit dem flexiblen Gehäuses (11) hermetisch abdichten und verbinden. Durch die Materialwahl des flexiblen Gehäuses (11) wird der Unterschied der thermischen Längenausdehnung zwischen dem Messobjektes und dem mikromechanischen Dehnungsmesssystems bei der Messung berücksichtigt und kann hierdurch kompensiert werden, um eine thermisch induzierte mechanische Verspannung des Messsystems zu verhindern.

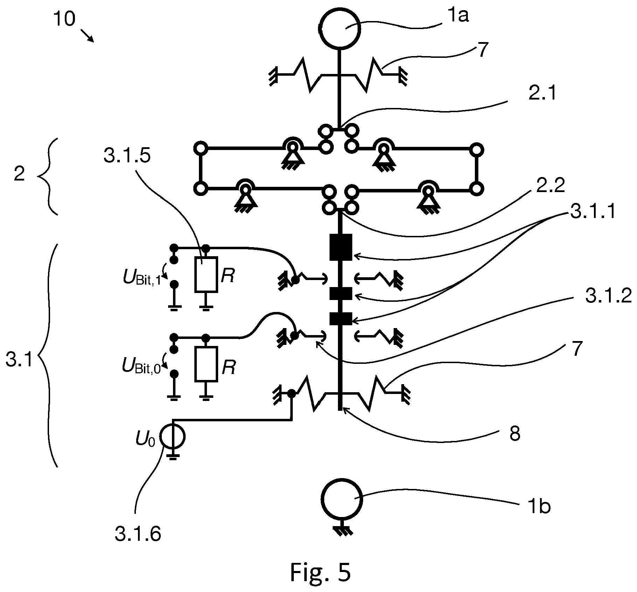

Fig. 5 zeigt eine mögliche Ausführungsform des Dehnungssensors (10).

Erfährt das Prüfobjekt (12) eine Dehnung, so werden am mikromechanischen Dehnungsmesssystem die Verbindungselemente (1a, 1b) relativ zueinander am Chip verschoben. Über die Verschiebungsamplitude und den bekannten Abstand der Verbindungselemente lässt sich so auf die vorliegende Dehnung schließen. Beträgt beispielsweise der initiale Abstand der Verbindungselemente zueinander 1 mm und wird der Abstand der Kontaktstellen um 10 μm vergrößert, so lässt sich daraus schließen, dass das Werkstück eine Dehnung von 1% ($\varepsilon$= 10 μm/1mm) erfährt.

Die relativen Verschiebungen, die die Verbindungspunkte/Verbindungselemente erfahren, sind wie im obigen Beispiel ersichtlich sehr gering, sodass die Verschiebungsamplitude (hier 10 μm) durch einen *mechanischen Verstärker* (2) in Form eines Hebelmechanismus verstärkt werden muss. Hierzu wird ein mikromechanischer Verstärker (2) eingesetzt, der die geringe Verschiebung am Verstärkereingang (2.1) in eine größere Verschiebung am Verstärkerausgang (2.2) wandelt. Die verstärke Verschiebung wird am Ausgang an einen translatorisch geführten Läufer (8) übertragen. Der mechanische Verstärker (2) ist zudem dafür ausgeführt, eine vordefinierte Übertragungsfunktion der Verstärkung in Abhängigkeit der Verschiebung umzusetzen. Neben einer konstanten Weg-Verstärkung werden so auch nicht-lineare Verstärkungsverläufe in Abhängigkeit der Eingangsverschiebung ermöglicht. Somit gelingt es mit Hilfe des Verstärkers (2) den Sensivitätsverlauf der Dehnungsmessung für verschiedene Wertebereiche anzupassen.

Zur elektrischen Erfassung der Verschiebung und damit der Dehnung des Prüfobjektes wird ein elektromechanischer Signalwandler (3) am Ausgang des mechanischen Verstärkers (2) implementiert. Hierzu kann an dem Läufer (8) der am Verstärkerausgang (2.2) montiert ist, eine geometrische Codierung in Form von *Kontaktelektroden* (3.1.1) eingeprägt werden. Weiterhin können sich neben dem Läufer (8) mehrere gestellfeste aber flexibel gelagerte Gegenelektroden (3.1.2) befinden, die mit den Kontaktelektroden am Läufer entweder in Kontakt kommen oder sich stark annähern, sobald der Läufer translatorisch verschoben wird.

Die am Läufer montierten Elektroden (3.1.1) und die gestellfest gelagerten Elektroden (3.1.2) sind im nicht-ausgelenkten Zustand des Läufers zunächst galvanisch getrennt. Zur elektrischen Erfassung der Verschiebung des Läufers wird eine elektrische Gleich- oder Wechselspannung $U_0$ am Läufer (8) beispielsweise über eine leitfähige Führungsfeder (7) eingeleitet und angelegt. Gleichzeitig wird die Spannung an den gestellfesten Kontaktelektroden (3.1.2) abgegriffen und gemessen. Über hochohmige Pull-down bzw. Pull-up Widerstände (3.1.5) wird das elektrische Potential an den Gegenelektroden (3.1.2) auf ein bekanntes und festes Potential gezogen, solange die gestellfesten Gegenelektroden (3.2.1) die beweglichen Fingerelektroden am Läufer (3.1.1) nicht berühren. Da kein Strom an den Pull-down oder Pull-up Widerständen fließt, fällt keine Spannung an den Widerständen ab. Kommt es hingegen zur Berührung oder zu einer Verringerung des Abstandes zwischen einer beweglichen Fingerelektrode (3.1.1) mit einer gestellfeste Gegenelektrode (3.1.2), so wird ein elektrischer Kontakt zwischen den beiden Elektroden hergestellt bzw. die Impedanz zwischen den beiden Kontakten wird verringert und es fällt eine Spannung am zugehörigen Pull-up oder Pull-down Widerstand (3.1.5) ab. Über die Anordnung der Elektroden am Läufer lassen sich für diskrete Positionen des Läufers ein digitaler Code an den Gegenelektroden abbilden.

Alternativ zu dieser diskreten schalterbasierten elektrischen Positionsbestimmung besteht auch die Möglichkeit, die Position des Läufers kapazitiv oder piezoresistiv auszuwerten.

Der Dehnungssensor wie bisher beschrieben ist in der Lage, kontinuierlich Dehnungsmessungen durchzuführen. Es werden bisher noch keine Werte mechanisch gespeichert. Die Dehnungsmessung ist daher wie bisher beschrieben nur aktiv, also nur unter Nutzung einer elektrischen Energiequelle möglich. Häufig ist aber keine kontinuierliche Abfrage der Messwerte notwendig. Oft genügt die Information, ob ein gewisser Maximalwert der Dehnung erreicht oder überschritten wurde.

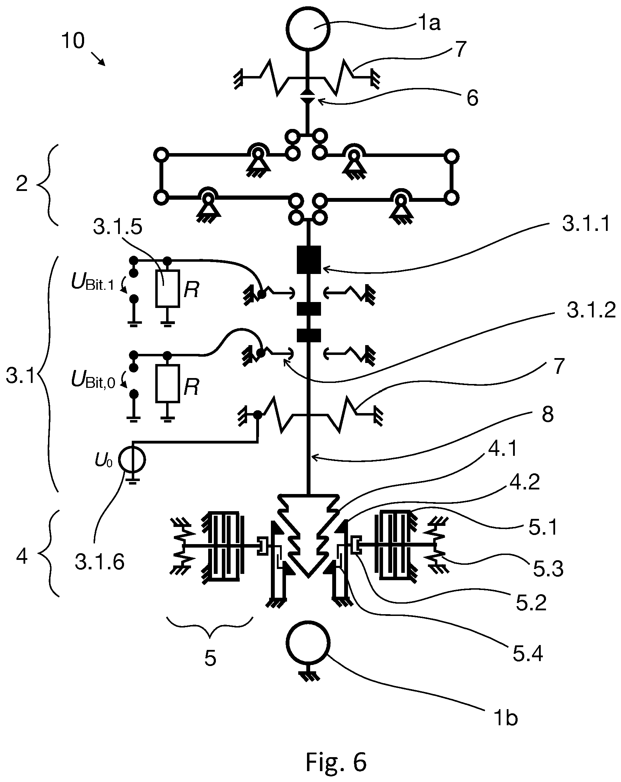

Gemäß einer weiteren Ausführungsform der vorliegenden Erfindung wird es mittels einer Erweiterung des Systems ermöglicht, die Maximalwerte der Dehnung zu speichern. Hierzu wird am Läufer neben dem elektromechanischen Wandler noch ein *mechanischer Maximalwertspeicher* (4) implementiert. Dieser umfasst, wie in Fig. 6 gezeigt, eine oder mehrere gestellfeste Sperrklingen (4.2) und Rastelemente (4.1) mit zugehörigen Rastzähnen (4.3), die den Läufer in seiner maximal erreichten Position fixieren.

Um eine erneute Messung zu ermöglichen, kann der Maximalwertspeicher optional so ausgestaltet sein, dass er sich über einen Rückstellmechanismus (5) wieder in seinen Ursprungszustand zurücksetzen lässt, wobei der gespeicherte Maximalwert gelöscht wird.

Wird während einer Messung nur kurzzeitig eine besonders hohe Dehnung gemessen und über den Maximalwertspeicher gespeichert, und bewegt sich das Verbindungselement bzw. der Läufer anschließend wieder in seine Ausgangsposition oder darüber hinaus zurück, so wird das gesamte mikromechanische System in einen Zustand hoher mechanischer Belastung versetzt, da durch die Dehnung des Bauelementes an beiden Verbindungselementen des Sensors gezogen bzw. gedrückt wird und die Sperrklingen am Maximalwertspeicher eine hohe Zugbeanspruchung erfahren. Zur Entlastung des Systems kann daher eine Kupplung (6) zwischen einem der Verbindungselemente (1a, 1b) und dem mechanischem Maximalwertspeicher (4) implementiert werden. Die Kupplung (6) ist dazu ausgeführt, eine durch das Verbindungselement eingeleitete Kraft selektiv nur in eine dafür vorgesehene Richtung an den mechanischen Maximalwertspeicher (4) weiterzuleiten.

Der Dehnungssensor wie bisher beschrieben ist in der Lage Dehnungen eines Messobjektes zu erfassen, ohne dabei zwischen mechanisch induzierter uniaxialer Dehnung und thermisch induzierter isotroper Dehnung infolge einer Wärmeausdehnung zu unterscheiden. Erfindungsgemäß wird die Vorrichtung daher noch um einen *Kompensationsmechanismus* (17) erweitert, der dazu ausgeführt ist die isotrope Wärmeausdehnung eines Messobjektes zu kompensieren und von einem uniaxialen Dehnungssignal des Messobjektes zu entkoppeln, sodass rein mechanisch induzierte temperaturunabhängige Dehnungsmessungen ermöglicht werden.

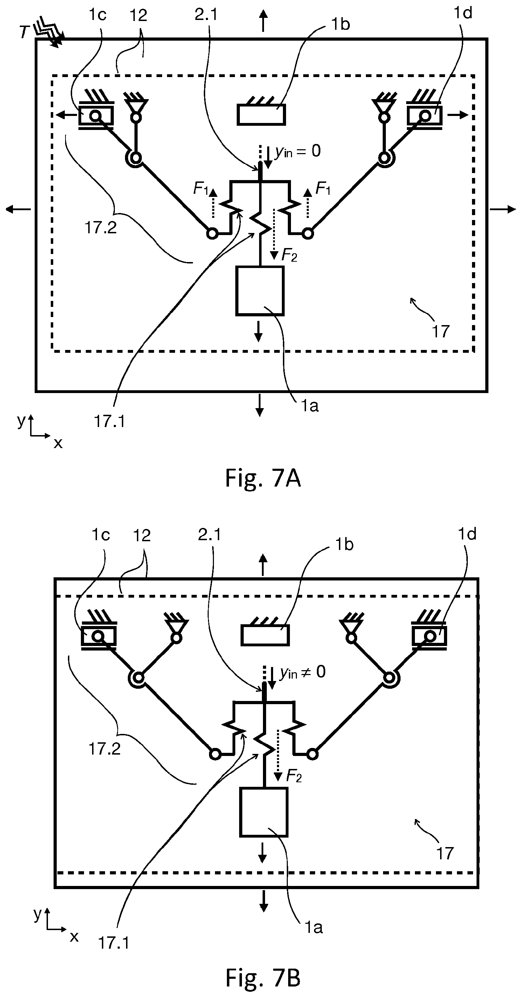

Fig. 7A zeigt einen möglichen Aufbau des Kompensationsmechanismus (17). In einer bevorzugten Ausführungsform ist der Kompensationsmechanismus (17) symmetrisch aufgebaut und wird zwischen Verstärkereingang (2.1) und dem flexible gelagerten Verbindungselement (1a) eingebaut. Auch eine beliebige Positionierung innerhalb der Messvorrichtung ist möglich. Der Kompensationsmechanismus (17) umfasst mindestens ein zusätzliches flexibel gelagertes Verbindungselement (1c, 1d) sowie mindestens einen Umlenkmechanismus (17.2), der dazu ausgeführt ist eine Verschiebung des Verbindungselements (1c, 1d) in seitlicher Richtung in eine Verschiebung in Längsrichtung zu transformieren. Zudem umfasst der Mechanismus einen Kraftransformator (17.1) beispielsweise in Form einer Feder, der dazu ausgeführt ist eine Verschiebung in eine Kraft *F* umzuwandeln.

Fig. 7A zeigt auch die Funktion des Kompensationsmechanismus (17): Dehnt sich das zu überwachende Messobjekt (12) z.B. aufgrund einer Temperaturänderung isotrop, also gleichmäßig in alle Richtungen aus, so ändert sich zum einen der Abstand zwischen den Verbindungselementen (1a, 1b) in Längsrichtung (y-Richtung) und zum anderen der Abstand der Verbindungselemente (1c, 1d) in seitlicher Richtung (x-Richtung). Die seitliche Verschiebung der zusätzlichen Verbindungselemente (1c, 1d) wird über den Umlenkmechanismus (17.2) in eine Längsverschiebung gedreht und über den Krafttransformator (17.1) in eine Kraft $F_1$ in Längsrichtung (y-Richtung) gewandelt. Die Kraft $F_1$ liegt dann direkt oder indirekt am Eingang des mechanischen Verstärkers (2.1) an. Das flexibel gelagerte Verbindungselement (1a) ist in dieser Konfiguration ebenfalls über einen Krafttransformator (17.1) mit dem Eingang des Verstärkers (2.1) verbunden. Jedoch wird bei isotroper Ausdehnung über das flexible gelagerte Verbindungselement (1a) und den zugehörigen Krafttransformator (17.1) eine zur Kraft $F_1$ betragsmäßig gleiche aber entgegengesetzte Kraft $F_2$ generiert, sodass sich die resultierende Kraft am Verstärkereingang (2.1) kompensieren und es zu keiner Verschiebung $y_{in}$ des Verstärkereingangs (2.1) kommt. Somit wird die isotrop wirkende Dehnung nicht über den Verstärker verstärkt.

Wirkt hingegen eine zusätzliche Dehnung in axialer Längsrichtung wie in Fig. 7B gezeigt, so wird nur der isotrope Anteil der Dehnung über den Kompensationsmechanismus kompensiert während die zusätzliche (mechanisch induzierte) axiale Dehnung in Längsrichtung (y-Richtung) an dem mechanischen Verstärker weitergeleitet und in Folge dessen verstärkt wird.

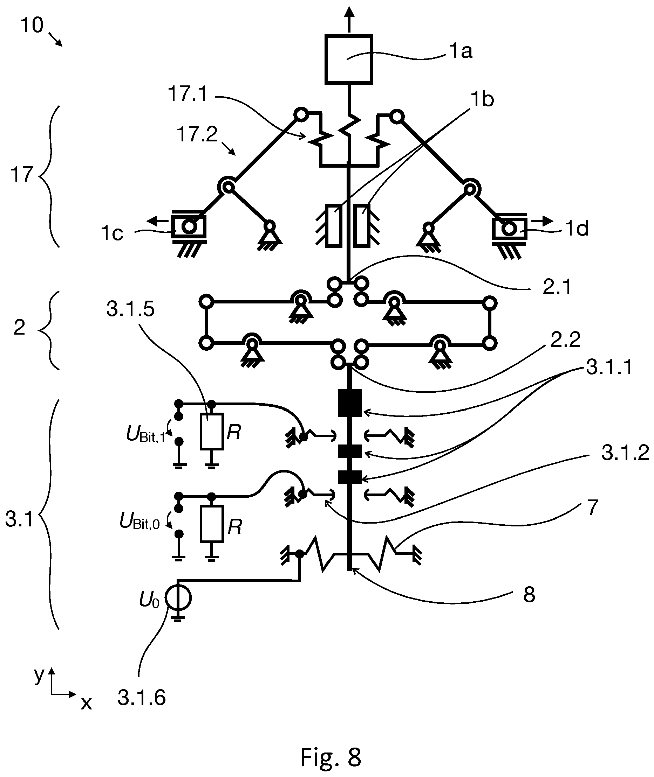

Fig. 8 zeigt vereinfacht ein Ausführungsbeispiel bei dem der Kompensationsmechanismus (17) an der erfindungsgemäßen Messvorrichtung ohne Maximalwertspeicher montiert ist. Der Kompensationsmechanismus (17) kann auch in Kombination mit einem Maximalwertspeicher betrieben werden. Die Reihenfolge und Verschaltung der Komponenten können variieren.

Durch die Kombination der Verbindungselemente (1) mit einem mechanischen Kompensationsmechanismus (17) entsteht der Vorteil und Effekt, dass thermisch induzierte und/oder isotrop wirkende Dehnung kompensiert werden können. Die Kompensation erfolgt mechanisch und ersetzt eine ggf. erforderliche elektronische Kompensationsschaltung. Dadurch wird zum Aufbereiten des Dehnungssignals keine kontinuierliche elektrische Energie benötigt. Zudem werden zur Kompensation von thermisch induzierter Dehnung keine zusätzlichen Messsysteme benötigt, um so eine diskrete Messbrücke aufzubauen, wie es etwa beim Aufbau einer Brückenschaltung bei DMS erforderlich wäre.

Der Kompensationsmechanismus gibt als Ausgangsgröße ein Verschiebungssignal in Abhängigkeit der korrigierten Dehnung aus. Durch die Kombination des Kompensationsmechanismus (17) mit dem mechanischen Verstärker (2), ergibt sich der weitere Vorteil, dass das ausgegebene Verschiebungssignal des Kompensationsmechanismus (17) zusätzlich mechanisch verstärkt wird, wodurch die Sensitivität des Messsystems erhöht wird.

Durch die Erweiterung um einen elektromechanischen Wandler (3) kann die verstärkte Verschiebung und damit das bereits kompensierte Dehnungssignal elektrisch ausgelesen werden. Wird die Vorrichtung weiterhin um einen Maximalwertspeicher (4) ergänzt, ergibt sich der Vorteil der energieautarken Messung, bei der zum Messen und Speichern des erreichten Maximalwerts des kompensierten Dehnungssignals keine elektrische Energie benötigt wird.

Die erfindungsgemäße Vorrichtung wie bisher beschrieben kann anstelle einer Dehnungsmessung durch eine einfache Modifikation auch zur Messung weiterer physikalischer Größen genutzt werden. Hierzu wird das flexibel gelagerte Verbindungselement (1a) nicht direkt mit dem Prüfobjekt (12) verbunden, sondern mit einem mechanischen Eingangswandler (16). Denkbar ist beispielsweise, dass zur Messung und Speicherung der Amplitude einer Beschleunigungseinwirkung auf ein Prüfobjekt (12) nur das gestellfeste Verbindungselement (1b) am Prüfobjekt montiert wird, während das flexible gelagerte Verbindungselement (1a) mit einer seismischen Prüfmasse (16.1) verbunden ist. Analog zur Dehnungsmessung bewirkt die Auslenkung der Prüfmasse (16.1) ebenfalls eine relative Verschiebung zwischen den gestellfesten und flexiblen Verbindungselementen (1a, 1b) die entsprechend dem Sensor- und Speicherkonzept der erfindungsgemäßen Vorrichtung erfasst, verstärkt, gespeichert und direkt digitalisiert wird.

## Beispiele

Die vorliegende Erfindung wird durch die im Folgenden gezeigten und diskutierten Beispiele und Zeichnungen genauer erläutert. Dabei ist zu beachten, dass die Beispiele und Zeichnungen nur beschreibenden Charakter haben und nicht dazu gedacht sind, die Erfindung in irgendeiner Form einzuschränken.

### Beispiel 1: Verbindungselement

Die Verbindungselemente (1) dienen der Verbindung zwischen Dehnungssensor (10) und dem zu untersuchenden Messobjekt (12) oder dem zwischen Messobjekt (12) und Dehnungssensor (10) befindlichem Gehäuse (11). Die Verbindungselemente (1a, 1b) haben am Dehnungssensor (10) fest definierte Positionen und Abstände. Je größer der Abstand zwischen den Verbindungselementen, desto sensitiver ist die Dehnungsmessung, jedoch desto unpräziser ist die Ortsauflösung der Dehnungsmessung. Mindestens ein Verbindungselement ist fest mit dem Substrat des Mikrosystems verbunden (1b), während mindestens ein weiteres translatorisch gegenüber dem Substrat/Gestell (1a) verschiebbar, z.B. über Festkörpergelenke oder Führungsfedern, gelagert ist. Über die Verbindungselemente wird die Dehnung des Prüfobjektes an den Dehnungssensor (10) in Form einer Verschiebung übertragen.

Bei einer bevorzugten Ausführungsform unterscheidet sich die Oberfläche der Verbindungselemente von den restlichen Oberflächen des mikromechanischen Messsystems darin, dass sie eine zum Fügen optimierte Oberflächentopologie und -morphologie aufweisen. Beispielsweise wird an den Verbindungsflächen ein zusätzlicher Haftvermittler abgeschieden, der das lokale Kleben oder Löten der Verbindungselemente an einem Werkstück oder Prüfling erlaubt, während die anderen Oberflächen des Chips nicht vom Lot oder vom Klebstoff benetzt werden. Auch das Abscheiden von Lot, Klebstoff oder von reaktiven Schichten aus z.B. Ni/Al an den Verbindungsoberflächen ist möglich, um so einen lokalen Schweißprozess zu realisieren.

### Beispiel 2: Mechanischer Verstärker

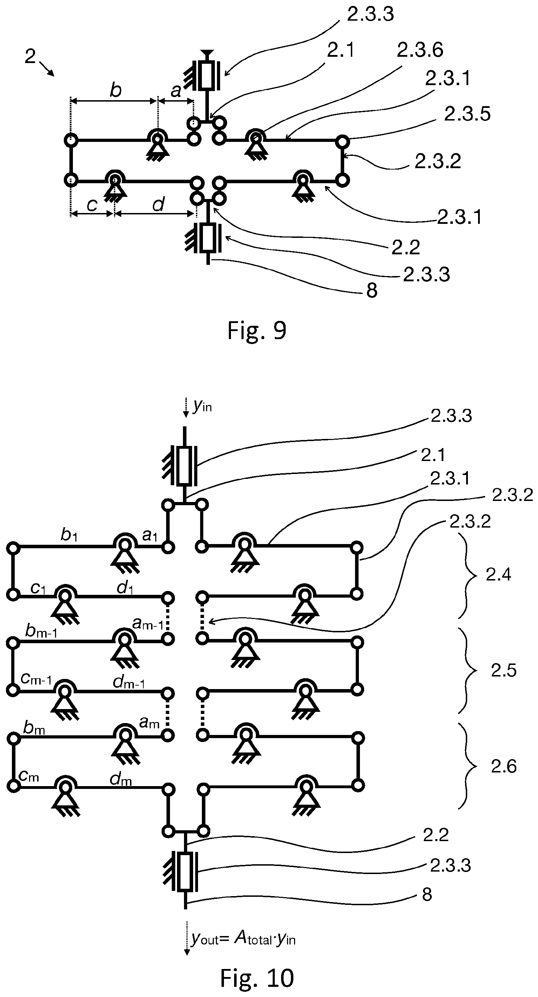

Eine technische Umsetzung des mechanischen Verstärkers wird in Fig. 9 dargestellt.

Der Mechanismus ist symmetrisch aufgebaut und umfasst mindestens zwei parallel angeordnete *Hebel* (2.3.1) auf jeder Seite. Jeder Hebel (2.3.1) ist rotatorisch gegenüber dem Gestell/ Substrat (13) gelagert. Die Hebel (2.3.1) sind über eine Seite jeweils über einen *Hebelverbinder* (2.3.2) paarweise miteinander gekoppelt. Auf diese Weise wird die Hebelverstärkung des ersten Hebels durch den zweiten, dritten, usw. noch einmal verstärkt, sodass sich die Gesamtverstärkung des mechanischen Verstärkers $A_{total}$ näherungsweise aus der Multiplikation der einzelnen Hebelverstärkungsfaktoren $A_j$ ergibt:

$$A_{\text{total}} = \prod_{j=1}^{j=m} A_j$$

Durch die multiplikative Verknüpfung ist es möglich, relativ hohe Verstärkungsfaktoren von vorzugsweise 1...1000 zu erreichen und den Verstärker auf sehr kleinem Raum umzusetzen. Für den in Fig. 9 gezeigten Verstärker gilt für den Verstärkungsfaktor $A_{\text{total}}$ in Abhängigkeit seiner Segmentlängen a, b, c und d:

$$A_{\text{total}} = \frac{y_{\text{out}}}{y_{\text{in}}} \approx \frac{b}{a} \cdot \frac{d}{c} \qquad (1)$$

Fig. 10 zeigt eine weitere Ausführungsform des mechanischen Verstärkers. Bei dieser Ausführungsform werden $m$ Hebel seriell über Hebelverbinder miteinander verbunden. Allgemein ergibt sich so ein Verstärkungsfaktor $A_{\text{total}}$ von:

$$A_{\text{total}} = \frac{y_{\text{out}}}{y_{\text{in}}} = \prod_{j=1}^{j=m} A_j \approx \prod_{j=1}^{j=m} \frac{b_j}{a_j} \cdot \frac{d_j}{c_j}$$

Um eine eingangsseitige translatorische Verschiebung auch ausgangsseitig wieder in eine rein translatorische Verschiebung zu wandeln, befinden sich am Ein- und Ausgang (2.1 und 2.2) des Verstärkers je ein Schubgelenk (2.3.3).
Die Gelenke des mikrosystemtechnisch umgesetzten zweidimensionalen Verstärkungsmechanismus können in Form von Festkörpergelenken umgesetzt werden, um so Abrieb an der Gelenkachsen zu vermeiden. Auf Schubgelenke am Ein- und Ausgang kann in diesem Fall verzichtet werden, da durch die Rückstellkräfte der Festkörpergelenke und dem symmetrischen Aufbau des Mechanismus j egliche Querkräfte am Ein- oder Ausgang kompensiert werden. Eine eingangsseitig translatorische Verschiebung wird so in eine ebenfalls reine translatorische Verschiebung am Ausgang umgewandelt. Zusätzliche Schubgelenke sind daher optional bei der Verwendung von Festkörpergelenken.
Neben der Weg-Verstärkung lässt sich über den mechanischen Verstärker (2) auch die Eingangs- und Ausgangssteifigkeit des Verstärkers (2) einstellen. Als Eingangssteifigkeit $c_{\text{in}}$ wird hier das Verhältnis von Eingangskraft $F_{in}$ zu Eingangsverschiebung $y_{\text{in}}$ am Ein- bzw. Ausgang definiert:

$$c_{\text{in}} = \frac{F_{\text{in}}}{y_{\text{in}}}$$

Und für die Ausgangssteifigkeit $c_{\text{out}}$ gilt entsprechend:

$$c_{\text{out}} = \frac{F_{\text{out}}}{y_{\text{out}}}$$

Die Steifigkeit am Verstärker wird durch die Steifigkeit $c_i$ der Festkörpergelenke sowie die Verstärkung der einzelnen Hebel bestimmt. Je steifer der Systemeingang, desto höher ist der Kraftaufwand, der aufgebracht werden muss, um das Eingangselement des Verstärkers zu verschieben.
Sollen wie in Fig. 10 gezeigt mehrere Hebelpaarungen (2.4) seriell verbunden werden, so ist darauf zu achten, dass die Eingangssteifigkeit der $j$-ten Hebelpaarung (2.5) der Größenordnung der Ausgangssteifigkeit der ($j$-1)-ten Hebelpaarung (z.B. 2.4) entspricht oder kleiner ausfällt:

$$c_{in,j} \leq c_{out,(j-1)}$$

Ist dies nicht gegeben, so ist der Kraftaufwand, der an der $j$-ten Hebelpaarung aufgebracht werden muss, verhältnismäßig hoch, sodass entweder das System zerstört wird oder sich die Festkörpergelenke oder die Hebel stark biegen, sodass die Genauigkeit der berechneten Ausgangsverschiebung nicht gegeben ist.

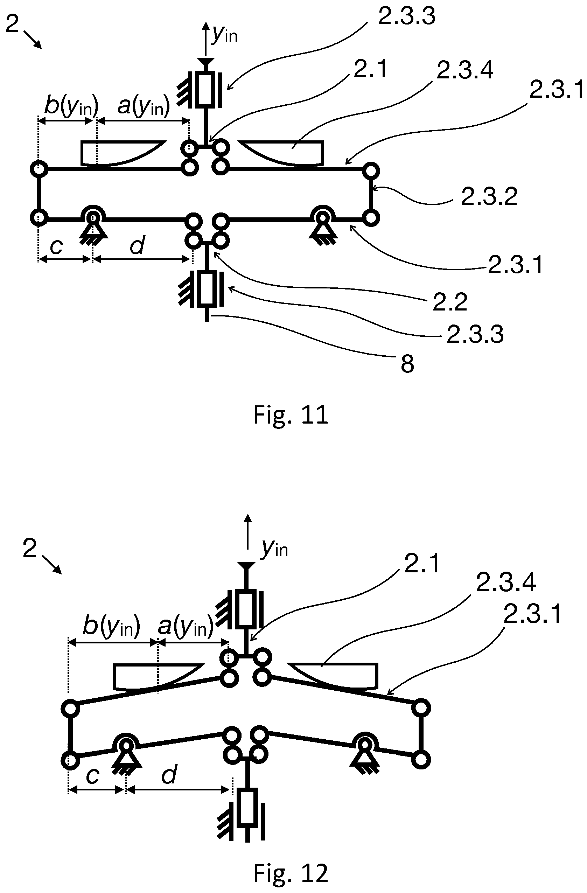

Fig. 11 zeigt eine erweiterte Ausführung des Verstärkers (2) mit implementierter Übertragungsfunktion, bei der ermöglicht wird, neben einem konstanten Verstärkungsfaktor einen verschiebungsabhängigen Verstärkungsfaktor auf die eingangsseitige Verschiebung anzuwenden.
In einer bevorzugten Ausführungsform stellt die Verstärkung $A_{\text{total}}(y_{\text{in}})$ eine Funktion der Eingangsverschiebung

$y_{in}$ dar. Die Funktion der Verstärkung $A_{total}(y_{in})$ kann dabei sowohl entsprechend

$$A_{\text{total}}(y_{\text{in}}) = A_{\text{total}}$$

konstant sein oder aber auch einer vordefinierten Funktion folgen. So kann die Verstärkung beispielsweise linear mit der Eingangsverschiebung $y_{in}$ und damit mit der Dehnung zunehmen:

$$A_{\text{total}}(y_{\text{in}}) = A_{\text{total}} \cdot y_{\text{in}}$$

Auch eine quadratisch zunehmende Verstärkung der Form

$$A_{\text{total}}(y_{\text{in}}) = A_{\text{total}} \cdot y_{\text{in}}^2$$

sowie logarithmische oder Wurzelfunktionen lassen sich am Verstärker implementieren.

Bei einer bevorzugten Ausführungsform werden hierzu am Hebelmechanismus mindestens eines der Gelenke, die den Hebelmechanismus mit dem Substrat verbinden, durch mindestens eine Kurvenscheibe (2.3.4) ersetzt, wobei die vordefinierte Übertragungsfunktion an der Kurvenscheibe (2.3.4) implementiert ist. Beim Auslenken des zugehörigen Hebels (2.3.1) wird dieser nicht um einen durch ein festes Gelenk definierten zum Substrat fixierten Punkt gedreht, sondern bewegt sich entlang der Kurvenscheibe (2.3.4). Da der Hebel an der Kurvenscheibe entlang gleitet, wandert auch der Drehpunkt in Abhängigkeit der Verschiebung, wodurch sich der zugehörige Abstand a oder b oder c oder d und damit die Verstärkung in Abhängigkeit der Verschiebung verändert, wie in Fig. 12 gezeigt wird.

**Beispiel 3:** Elektromechanischer Wandler

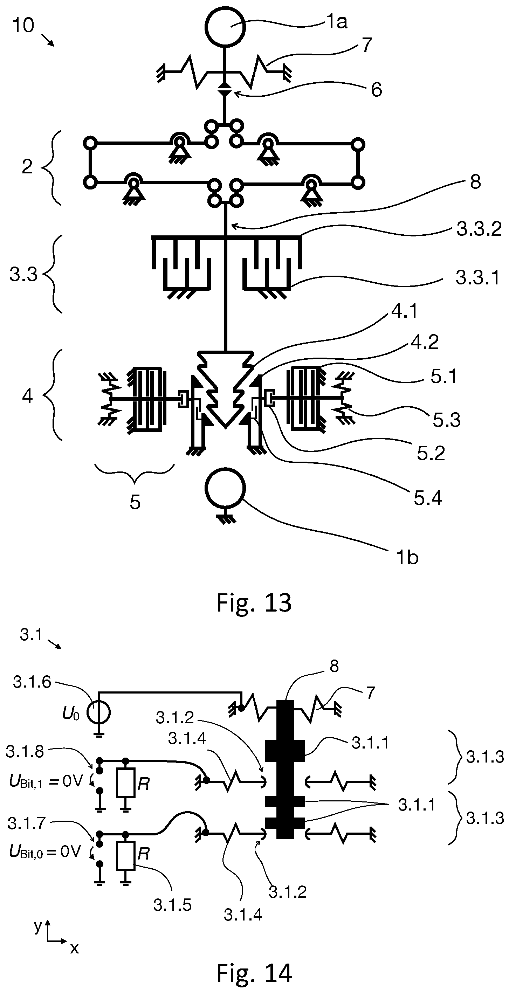

Die Aufgabe des elektromechanischen Wandlers (3) besteht darin, die Verschiebung am Ausgang des Verstärkers (2.2) in ein elektrisches Signal zu wandeln. Dafür gibt es verschiedene Möglichkeiten einer elektromechanischen Zustandserfassung. So lässt sich die Verschiebung beispielsweise über einen kapazitiven Wandler (3.3), wie in Fig. 13 gezeigt, erfassen. Hierzu können isolierte frei bewegliche Elektroden am Mikrosystem umgesetzt werden, die einen Parallelplattenkondensator bilden. Die Elektroden lassen sich zueinander verschieben und erlauben so die Variation der Kapazität des Kondensators. Über die Auswertung der Kapazität lässt sich so die Verschiebung des Läufers (8) bestimmen. Der Nachteil dieser Lösung besteht darin, dass das Messsystem nur in Kombination mit einer Kapazitäts-messsschaltung genutzt werden kann, wodurch auch parasitäre Effekte wie thermisches Rauschen den Messwert beeinflussen.

Um auf eine aufwendige elektrische Schaltung zu verzichten, wird daher bevorzugt ein kontaktbasierter Wandler genutzt. In Fig. 14 wird das allgemeine Funktionsprinzip des Wandlers gezeigt.

Der Wandler umfasst $n_w$ gestellfeste und flexibel gelagerte Gegenelektroden (3.1.2) sowie dazu paarweise zugehörige Fingerelektrodengruppe (3.1.3). Die Fingerelektrodengruppen sind dabei am Läufer (8) des Dehnungssensors montiert und lassen sich translatorisch entlang der Läuferrichtung mit dem Läufer verschieben. Die Gegenelektroden sind hingegen gestellfest entlang der Fingerelektrodengruppen positioniert. Eine Fingerelektrodengruppe (3.1.3) umfasst eine oder mehrere Fingerelektroden (3.1.1), die dadurch gekennzeichnet sind, dass sie bei einer definierten translatorischen Auslenkung des Läufers einen elektrischen Kontakt mit den gestellfesten Gegenelektroden herstellen oder es zwischen Gegenelektroden und Fingerelektroden zu einer Impedanzänderung kommt, sobald sich beide Elektroden gegenüberstehen. Über die Anordnung der Elektroden wird die Position des Läufers eindeutig geometrisch codiert.

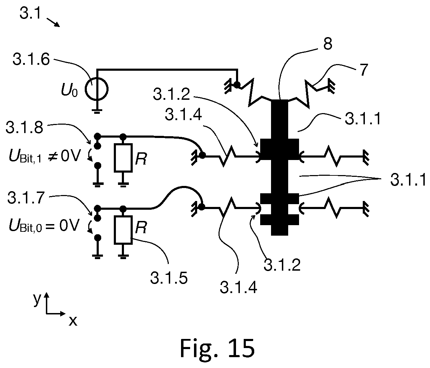

Zur elektrischen Erfassung der diskreten Läuferposition wird am Läufer eine elektrische Spannung $U_0$ angelegt. Gleichzeitig wird die Spannung an den gestellfesten Gegenelektroden (3.1.2) gemessen bzw. abgegriffen. Solange sich die Gegenelektroden (3.1.2) und die Fingerelektroden (3.1.1) am Läufer nicht gegenüberstehen oder berühren, liegt an den Gegenelektroden ein erstes definiertes elektrisches Potential, beispielsweise 0 V an. Dieses definierte erste elektrische Potential wird z.B. über Pull-down oder Pull-up Widerstände an den gestellfesten Gegenelektroden gewährleistet. Wird nun der Läufer verschoben, sodass sich je eine Fingerelektrode und eine Gegenelektrode gegenüberstehen, so wird die am Läufer angelegte Spannung $U_0$ von den Fingerelektroden an die Gegenelektroden übertragen, sodass nun an der entsprechenden Gegenelektrode ein vom initialen Zustand verschiedenes zweites elektrisches Potential (idealerweise $U_0$) anliegt. Gleichzeitig fällt über dem zugehörigen Pull-up oder Pull-down Widerstand eine Spannung ab. Figur 15 zeigt exemplarisch, wie der Verschiebungszustand des Läufers an den Pull-down Widerständen abgegriffen wird. Im gezeigten Zustand sind die Gegen- und Fingerelektroden von Bit 1 in Kontakt, sodass eine Spannung ungleich 0 V an dem zugehörigen Pull-down Widerstand abfällt. Die Finger- und Gegenelektroden von Bit 0 sind nicht kontaktiert, folglich fällt keine Spannung am zugehörigen Pull-down Widerstand ab.

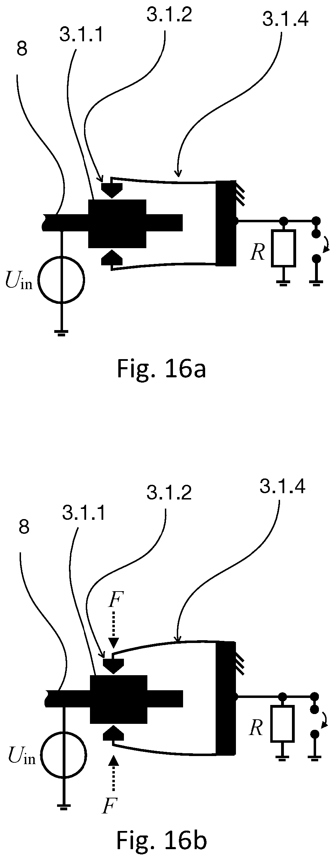

Der Abstand zwischen Fingerelektroden und Gegenelektroden kann einerseits überlappend gestaltet sein, sodass bei der Verschiebung der Fingerelektroden diese an den Gegenelektroden entlang gleiten. Eine solche Konfiguration wird beispielsweise in Fig. 16a gezeigt. Andererseits können die Gegenelektroden und Fingerelektroden auch in einem geringen Abstand zueinander positioniert sein wie in Fig. 16b dargestellt. Durch das Anlegen einer elektrischen Spannung zwischen den beiden Elektroden entsteht dann eine elektrostatische Kraft, die die flexibel gelagerten Gegenelektroden an die Fingerelektroden drückt, sodass es zu einer Spannungsübertragung kommt. Der Vorteil der Ausführungsform, bei der die Elektroden in einem geringem Abstand zueinander stehen und sich nur beim Anlegen einer Spannung berühren, besteht darin, dass es zu einer geringen Reibung zwischen den Elektroden kommt und sich die Elektroden nur beim eigentlichen elektrischen Auslesen mechanisch kontaktieren. Durch Anlegen einer Wechselspannung kann die mechanische Kontaktierungszeit zudem sehr kurzgehalten werden.

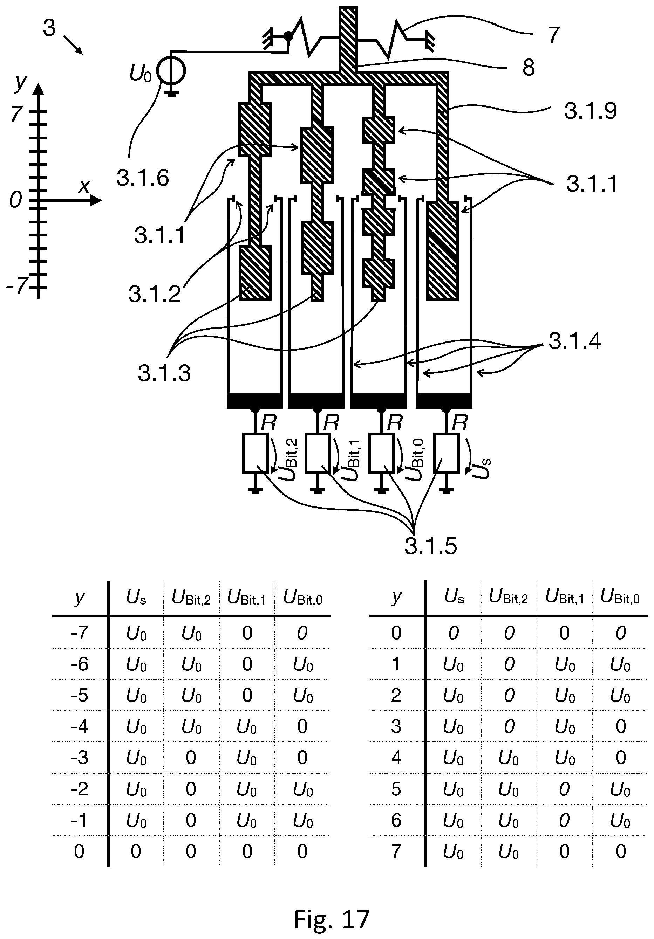

In einer bevorzugten Ausführungsform können die Fingerelektrodengruppen (3.1.3) entweder seriell am Läufer (8) oder auch in einer Kammstruktur angeordnet sein, wie Fig. 17 zeigt. Hier sind die Fingerelektrodengruppen (3.1.3) sowie die gestellfesten Gegenelektroden (3.1.2) parallel zur Läuferachse (y-Richtung) angeordnet. Die binäre Codierung über die Fingerelektroden ist in Fig. 17 exemplarisch in Form von Gray-Code realisiert, denkbar sind auch andere Formen der binären Codierung wie Dual-Code oder BCD-Code. Zur Codierung einer vorzeichenbehafteten Dehnung unter Berücksichtigung der Dehnungsrichtung wird in einer weiteren bevorzugten Ausführungsform ein zusätzliches Paar aus Finger- und Gegenelektroden als zusätzlicher Vorzeichenzweig (3.1.9) ergänzt. Die zur binären Codierung beitragenden Fingerelektroden werden dann durch eine zweite, spiegelsymmetrischen Anordnung der Fingerelektroden am Läufer erweitert, wie in Fig. 17 gezeigt. Fig. 17 zeigt anhand einer Tabelle auch die Spannungen die an den Pull-Down Widerständen idealerweise in Abhängigkeit der Läuferposition y abfallen. Die parallel abgegriffenen Spannungen bilden ein diskretes elektrisches paralleles binäres Signal mit Gray-Codierung. Die Spannung $U_S$ gibt dabei das Vorzeichen der Dehnung bzw. der Verschiebung des Läufers in y-Richtung an.

Als Wandler können auch beispielsweise ein kapazitiver oder piezoresistiver Wandler genutzt werden.

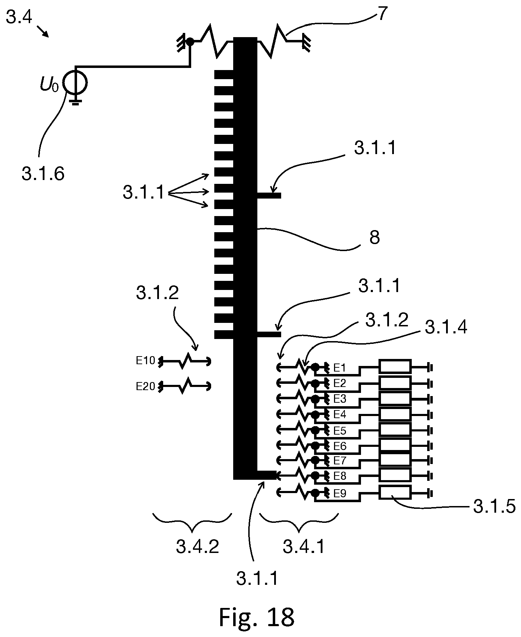

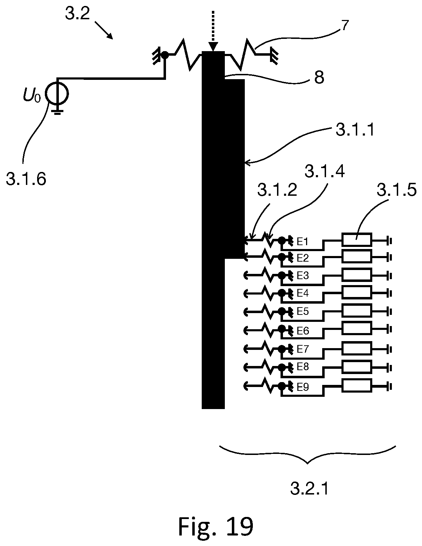

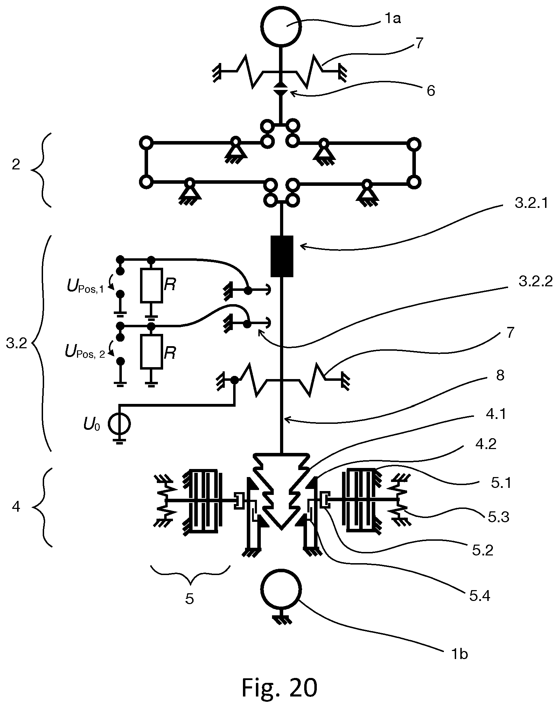

Neben einer direkten elektro-mechanischen Analog-Digital Wandlung ist auch eine binäre/digitale Positionserfassung mit Hilfe weiterer Übertragungsfunktionen möglich, die anstelle eines binär codierten Signals einen Thermometer-Code (z. B. 0001111) oder eine Dezimalzahl liefern. Hierzu wird die Codiereinheit des elektro-mechanischen Wandlers auf das entsprechende Zahlen- oder Codiersystem angepasst. Fig. 18 zeigt eine Ausführungsform für die Codierung einer Dezimalzahl, während Fig. 19 eine Ausführungsform für die Codierung von sogenanntem Thermometercode darstellt. Fig. 20 zeigt die Implementierung einer Codiereinheit zur Übertragung von Thermometercode im Gesamtsystem.

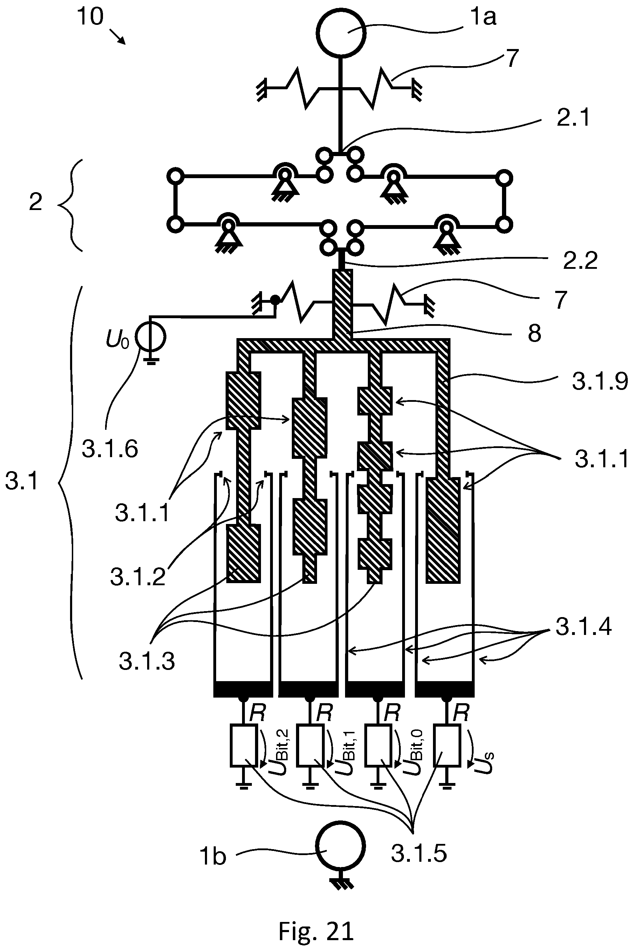

Fig. 21 zeigt ein weiteres Ausführungsbeispiel eines bi-direktionalen Dehnungssensors bei dem der elektromechanische Wandler eine Kammstruktur aufweist, einen Vorzeichenzweig (3.1.9) enthält und als binäre Codierung der Fingerelektrodengruppen (3.1.3) Gray-Code gewählt wurde.

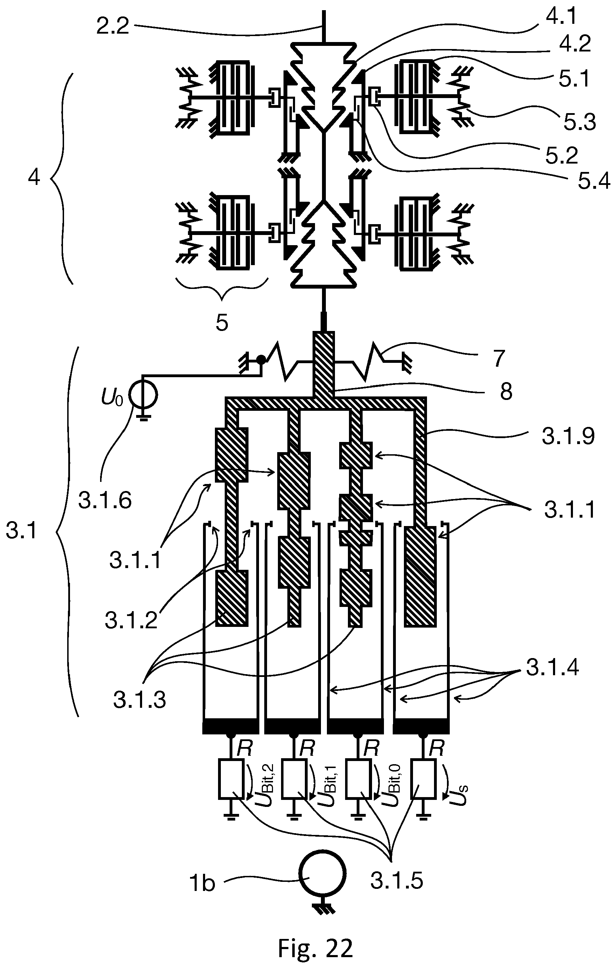

Fig. 22 zeigt eine weitere bevorzugte Ausführungsform des Signalwandlers (3) in Kombination mit einem mechanischen Maximalwertspeicher (4). Durch die Variation der Abstände und Breiten der Fingerelektroden (3.1.1) wird hier eine vordefinierte diskrete Übertragungsfunktion am mikromechanischen Analog-Digital Wandler (3.1) implementiert. Auch die Abstände der Rastzähne am mechanischen Maximalwertspeicher können dabei an die Abstände der Fingerelektroden (3.1.1) angepasst werden. Die Implementierung einer vordefinierten Übertragungsfunktion eignet sich z. B. zur Linearisierung und/ oder zur Anpassung des Messsensitivität über einen definierten Verschiebungs- und damit Messbereich. Fig. 22 zeigt zudem, dass die Reihenfolge von mikromechanischem Verstärker, elektromechanischem Signalwandler (3) im Aufbau variieren kann. Am Ausführungsbeispiel wird auch deutlich, dass der mechanische Maximalwertspeicher (4) auch für eine bi-direktionale Maximalwertspeicherung ausgeführt werden kann.

Ein besonderer Vorteil des elektro-mechanischen Wandlers in Form des mikromechanischen Analog-Digital Wandlers (3.1) besteht in der Diskretisierung und Digitalisierung einer Verschiebung in der mechanischen Domäne. Es werden keine weiteren aktiven elektrischen Bauelemente zur binären Codierung des Dehnungs- bzw. des Verschiebungssignals am Eingang des Wandlers benötigt. Durch die Möglichkeit einen geringen Abstand zwischen Finger- und Gegenelektroden einzustellen, wird die eigentliche Dehnungsmessung nur während der Auslesung des Wandlers (3.1) durch z.B. Reibung beeinflusst. Zudem werden für eine Signalauflösung von $n$ Bit nur eine Anzahl von $n$ Fingerelektrodengruppen (3.1.3) mit ggf. einem zusätzlichen Vorzeichenzweig (3.1.9) benötigt. Somit ist eine hohe Anzahl an Diskretisierungsschritten bei minimalem Platzbedarf möglich. Zudem lassen sich beliebige binäre Codes sowie beliebige Übertragungsfunktionen über die Anordnung und Größe der Fingerelektroden implementieren. Somit ist neben der passiven Digitalisierung auch bereits eine erste passive Datenaufbereitung durch Kennlinienanpassung über den Wandler möglich.

**Beispiel 4:** Mechanischer Maximalwertspeicher

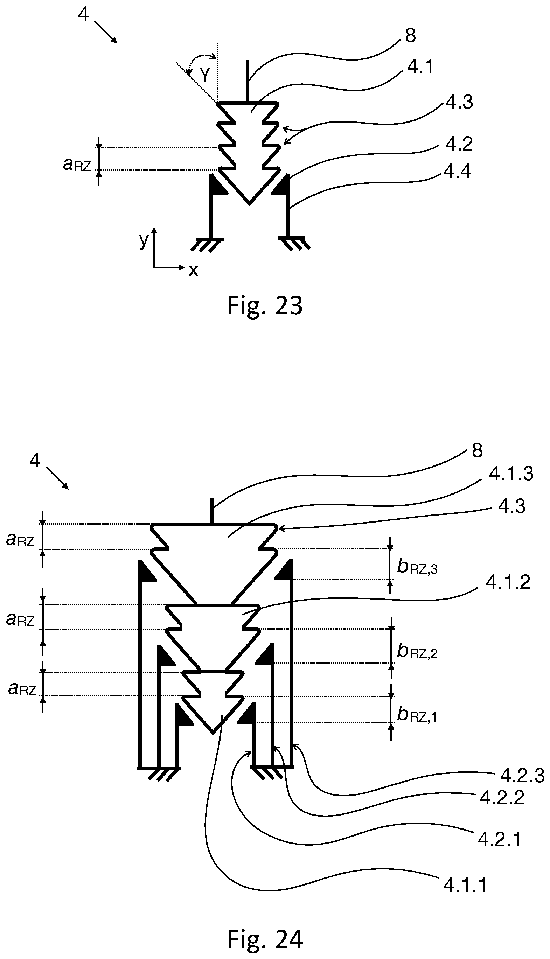

Fig. 23 zeigt eine bevorzugte Ausführungsform des mechanischen Maximalwertspeichers (4).

Der mechanische Maximalwertspeicher (4) basiert auf einem Rastmechanismus bestehend aus Sperrklingen (4.2) und mindestens einem Rastelement (4.1) mit daran befindlichen Rastzähnen (4.3). Die Rastelemente sind dabei am Läufer (8) befestigt, während die Sperrklingen (4.2) gestellfest mit dem Substrat/Gestell des Dehnungssensors verbunden sind. Eine umgekehrte Anordnung ist ebenfalls möglich. Wird der Läufer (8) verschoben, so gleiten die am Läufer befindlichen Rastzähne (4.3) über die gestellfest, aber flexibel- und federgelagerten Sperrklingen. Dabei sind die Rastzähne so ausgelegt, dass die Rasten gegeneinander in eine Richtung (z.B. y-Richtung) gleiten, sich bei einer Bewegung in die entgegengesetzte Richtung jedoch ein Formschluss ausbildet, sodass die Rückwärtsbewegung gesperrt wird. Die formschlüssige Verbindung erlaubt keine Rückkehr des Läufers (8) zu seiner initialen Position, sodass der erreichte Maximalwert der Läuferauslenkung gespeichert wird.

Die Größe der Rastzähne sowie deren Abstände ($a_{RZ}$) werden bei dieser Anordnung maßgeblich über die Auflösung der Lithografie während der Fertigung bestimmt. Je genauer die Fertigung, desto geringer lässt sich der Abstand $a_{RZ}$ umsetzen und desto geringer ist auch die Schrittweite $y_s$ zwischen den einzelnen Diskretisierungsschritten. Ferner wird der Reibwinkel $\gamma$ an den Rastzähnen durch den Haftreibkoeffizienten zwischen den aneinander gleitenden Oberflächen limitiert. Durch den Abstand der einzelnen Rastzähne $a_{RZ}$ wird die minimale Schrittweite $y_s$ der diskretisierten Positionserfassung bestimmt. So gilt für die minimale Schrittweite $y_s$ von Rastposition zu Rastposition:

$$y_S \geq a_{RZ}$$

Um der Limitierung der minimalen Schrittweite $y_s$ entgegenzuwirken, kann der mechanische Speicher um zusätzliche Rastmechanismen-Paare bestehend aus Rastelementen und Sperrklingen ergänzt werden, wie in Fig. 24 gezeigt wird. Der Abstand $a_{RZ}$ der einzelnen Rastzähne (4.3) kann dabei für jedes zusätzliche Rastelement (4.1) identisch sein, kann jedoch auch variieren. Auch hier werden die Größe und der Abstand der Rastzähne zueinander maßgeblich durch die Auflösung der Lithografie begrenzt. Eine geringere Schrittweite $y_s$ kann j edoch dadurch erreicht werden, dass mit jeder zusätzlichen Paarung ein definierter Versatz der Rastzahn-Position umgesetzt wird. So kann für jede weitere Paarung der initiale Abstand $b_{RZ,i}$ zwischen dem jeweils ersten Rastzahn eines i-ten Rastelements und der zugehörigen i-ten Sperrklinge in Bezug auf eine weitere Paarung variieren.

Werden insgesamt $n$ Paare bestehend aus je einem Rastelement und mindestens einer Sperrklinge vorgesehen, so gilt für den initialen Abstand $b_{RZ,i}$ zwischen Sperrklinge und erstem Rastzahn des i-ten Rastelements:

$$b_{\mathrm{RZ},i} = a_{\mathrm{RZ}} + (i-1)\frac{a_{\mathrm{RZ}}}{n} + a_{\mathrm{offset}}$$

Dabei ist $a_{\mathrm{offset}}$ ein fertigungsbedingter Offset, der für alle $n$ Paare identisch sein sollte.

Ist die Anzahl der Rastzähne $k$ pro Rastelement für alle $n$ Rastelemente identisch, so gilt für die Anzahl der speicherbaren Positionen z:

$$z = k \cdot n + 1$$

Inklusive der ersten initialen Position des Läufers können folglich insgesamt z Positionszustände gespeichert werden. Die minimale Schrittweite $y_s$ beträgt dann:

$$y_S = \frac{a_{\mathrm{RS}}}{n}$$

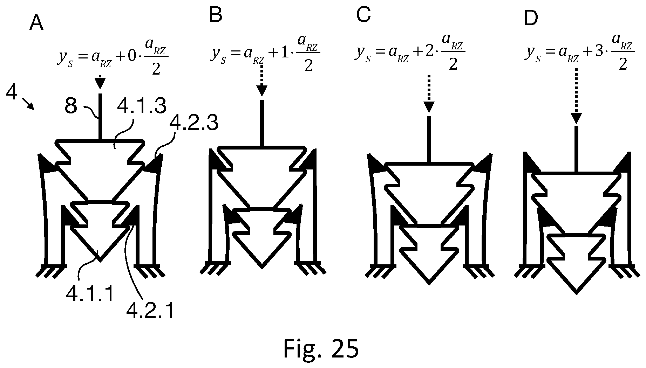

Fig. 25 zeigt eine Ausführungsform eines symmetrischen mechanischen Maximalwertspeichers mit insgesamt zwei Rastelementen ($n$=2) die je über zwei Rastzähne ($k$=2) auf jeder Seite verfügen. Insgesamt können hiermit also fünf Positionen ($z$=5) inklusive der initialen nicht-ausgelenkten Position gespeichert werden. Die minimale Schrittweite beträgt $y_S = \frac{a_{\mathrm{RS}}}{2}$.

Die Größe der Rastzähne sowie deren Abstände werden maßgeblich über die Auflösung der Lithografie bestimmt. Ferner wird der Reibwinkel an den Rastzähnen durch den Haftreibkoeffizienten zwischen den aneinander gleitenden Oberflächen limitiert. Da der Abstand der Rastzähne die Schrittweite $a_{RZ}$ der diskreten Schritte und damit die Auflösung des Speichers limitiert, können weitere Rastmechanismen im System ergänzt werden, die jedoch um $a_{RZ}/n$ versetzt sind. Auf diese Weise können die Rastzähne auch Zwischenpositionen unabhängig von der lithografischen Auflösung einnehmen.

Fig. 24 zeigt einen Rastmechanismus, bei dem die minimale lithografie-bedingte Schrittweite $a_{RZ}$ über einen zweiten um $a_{RZ}/3$ versetzten Rastmechanismus und einen um 2$a_{RZ}/3$ gedrittelt wird. Der dargestellte Rastmechanismus kann so sechs feste Positionen im Abstand von $a_{RZ}/3$ einnehmen, wobei für die erste Position aus der initialen Lage eine Verschiebung des Läufers um $a_{RZ}$ notwendig ist.

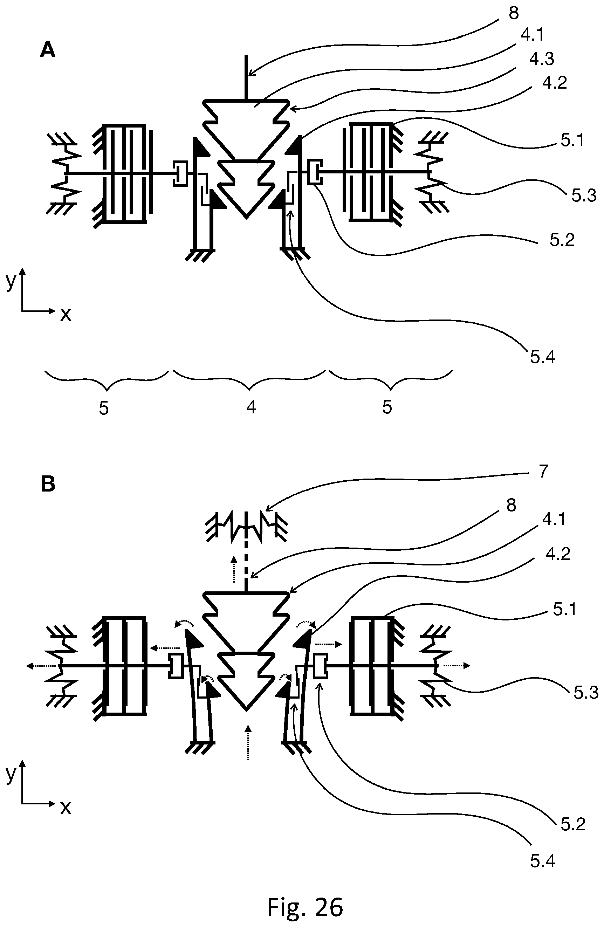

Zum Zurücksetzen des mechanischen Maximalwertspeichers müssen die Sperrklingen (4.2) von den Rastzähnen (4.3) gelöst werden. Hierzu können verschiedene konventionelle Aktoren der Mikrosystemtechnik eingesetzt werden. In Fig 26A wird hierzu ein bevorzugter Rückstellmechanismus (5) basierend auf elektrostatischen Aktoren (5.1) gezeigt. Mögliche Ausführungsformen umfassen aber auch thermische Aktoren, die eine besonders hohe Kraft aufbringen können und dabei geringen Platzbedarf auf dem Chip benötigen. Fig. 26B zeigt, wie der Rückstellmechanismus den Kontakt zwischen Sperrklingen (4.2) und Rastzähnen (4.3) löst.

Der Rückstellmechanismus ist über eine Rückstellkupplung (5.2) mit dem Rastmechanismus bzw. den Sperrklingen verbunden. Die Rückstellkupplung hat die Aufgabe, die Bewegungen der Sperrklingen, die beim Speichervorgang auftreten, von dem Rückstellmechanismus unidirektional zu entkoppeln, jedoch gleichzeitig die Verschiebungs- und Kraftaufwendungen des Aktors an den Rastmechanismus insbesondere an die Sperrklingen weiterzuleiten, um die Sperrklingen von den Rastzähnen zu lösen. Ferner sorgen Überträger (5.4) für die Verteilung der Kraft- und Verschiebungsübertragung vom Aktor auf alle zu lösenden Sperrklingen (4.2).

**Beispiel 5:** Kupplung

Der mechanische Maximalwertspeicher kann auch in Verbindung mit einer Kupplung (6) ausgebildet werden. Wird der erreichte Maximalwert durch den Rastmechanismus gespeichert, so ist der Läufer (8) dauerhaft ausgelenkt. Entspannt sich dann jedoch das zu überwachende Bauelement oder wird dieses in die entgegengesetzte Richtung beansprucht, so wirkt auf den Läufer (8) und damit auch an den Rastzähnen eine hohe Kraft, die den Mechanismus zerstören könnte. Aus diesem Grund kann der Maximalwertspeicher (4) mechanisch vom Verbindungselement (1a, 1b) über eine Kupplung (6) entkoppelt werden.

Im einfachsten Fall kann die Kupplung aus zwei gegenüberliegenden, mechanisch getrennten Stößeln bestehen, wie in Fig. 27 gezeigt. Einer der Stößel (6.1) ist dabei unmittelbar am Verbindungselement angebracht, während der zugehörige zweite Stößel (6.2) am Eingang des mechanischen Verstärkers platziert ist. Verschiebungen des Verbindungselements in negative y-Richtung werden dabei über den ersten Stößel an den zweiten Stößel übertragen. Wird das Verbindungselement jedoch in die andere Richtung ausgelenkt, so hat dies keine Auswirkungen auf den zweiten Stößel und damit auf den restlichen Mechanismus.

**Beispiel 6:** Erweiterung des mikromechanischen Messsystems zur energieautarken Erfassung, Speicherung und Digitalisierung weiterer physikalischer Größen

Das mikromechanische Messsystem kann alternativ oder in Ergänzung zur Dehnungsmessung auch zur energieautarken Messung weiterer physikalischer Größen genutzt werden. Vorzugsweise wird dazu das flexibel gelagerte Verbindungselement (1a) nicht direkt mit einem zu Dehnenden Prüfobjekt (12) verbunden, sondern alternativ mit einem mechanischen Eingangswandler (16), der dazu ausgeführt ist eine zu messende physikalische Größe in eine Verschiebungs- oder Dehnungsgröße zu wandeln die wiederum eine relative Verschiebung zwischen gestellfestem (1b) und flexiblen Verbindungselemente (1a) hervorruft. Fig. 28 zeigt eine mögliche Anordnung der einzelnen Komponenten am mikromechanischen Messsystem. Zur Einschränkung von Funktionen ist eine Vertauschung oder Entfernung einzelner Komponenten denkbar. Dies gilt auch für die reine Dehnungsmessung.

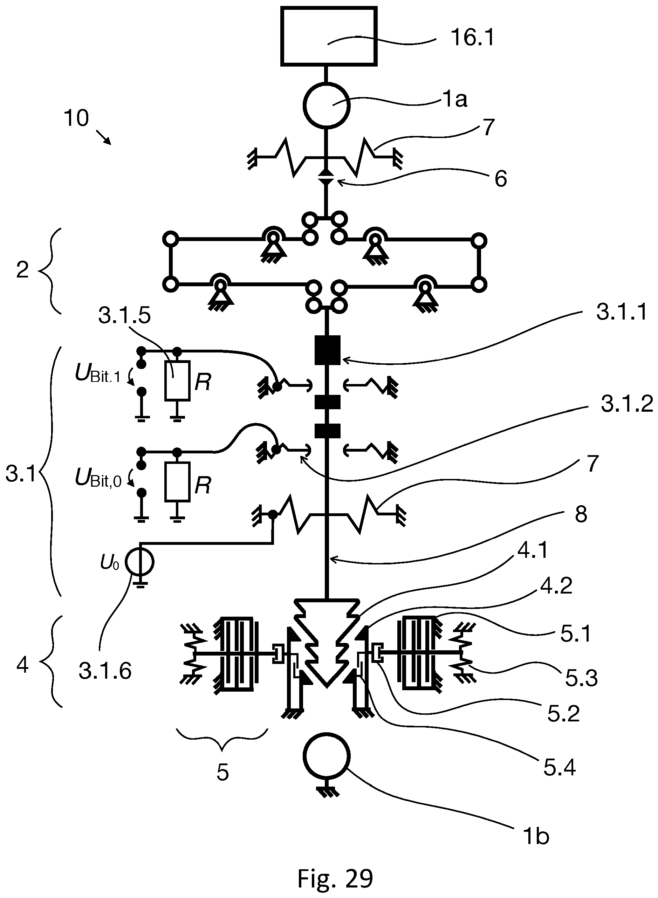

Fig. 29 zeigt beispielhaft eine bevorzugte Ausführungsform des mikromechanischen Messsystems bei dem das flexibel gelagerte Verbindungselement (1a) mit einer seismischen Masse (16.1) verbunden ist, die als mechanischer Eingangswandler (16) zur Messung einer Beschleunigung dient.

Neben des gezeigten Beispiels für die Montage, Anordnung und Ausführung mechanischer Eingangswandler (16) am mikromechanischen Messsystem sind auch weitere Ausführungsformen des mechanischen Eingangswandlers (16) für alternative physikalische Messgrößen wie beispielsweise Temperatur, Strom, Spannung, Feuchtigkeit, elektrische oder magnetische Feldstärken denkbar. Insbesondere zur Erfassung von Feldgrößen ist die Nutzung magnetischer, dielektrische Materialien oder Elektret am flexibel gelagerten Verbindungselement (1a) als mechanischer Eingangswandler (16) denkbar. Zur Erfassung von Strom und Spannung kommen aus dem Stand der Technik bekannte elektrostatische oder elektrothermische Aktoren der Mikrosystemtechnik in Frage. Zur Erfassung von Temperaturen können Bi-Morphe oder Aktoren aus Formgedächtnislegierung zwischen flexibel gelagerten Verbindungselement und Gestell implementiert werden.

**Beispiel 7:** Herstellung des mikromechanischen Messsystems

Das technische Prinzip des Dehnungsmesssystems lässt sich mit verschiedenen Technologien umsetzen, insbesondere mit Prozessen der Mikrosystemtechnik.

Besonders geeignet ist die technologische Umsetzung auf Basis eines SOI-Substrates ("Siliconon-Insulator").

Diese Substrate umfassen drei Schichten: einen sog. "Devicelayer", bestehend aus oder enthaltend einkristallines Silicium (15.1), einen "Buried Oxide Layer" (BOX-Layer) aus $SiO_2$ (15.2) und eine weitere Schicht bestehend aus oder enthaltend einkristallinem Silicium, dem "Handellayer" (15.3).

Der Devicelayer (15.1) trägt die frei beweglichen, zweidimensionalen mechanischen Strukturen wie beispielsweise den mechanischen Verstärker (2) oder den Maximalwertspeicher (4), während der Handlelayer (15.3) als mechanisches Gestell verstanden werden kann, der über die $SiO_2$-Schicht des BOX-Layers (15.2) mit den mechanischen Strukturen des Devicelayers an fest definierten Stellen verbunden ist. Der BOX-Layer (15.2) bildet dabei eine Opferschicht, die unterhalb der frei beweglichen Strukturen partiell entfernt wird.

Zur Fertigung des Dehnungsmesssystems (10) wird sowohl der Devicelayer (15.1) als auch der Handlelayer (15.3) strukturiert. Im Devicelayer (15.1) werden die gesamten mechanischen und elektromechanischen Komponenten realisiert, während am Handlelayer (15.3) die Verbindungselemente (1a, 1b) vorgesehen sind, die den Sensor mit einem Messobjekt (12) oder einem flexiblen Gehäuse (11) verbinden. Alternativ können die Verbindungselemente auch am Devicelayer angebracht sein. Handle- und Devicelayer sind über den BOX-Layer (15.2) verbunden, so dass die mechanische Verschiebung an den Verbindungselementen auf den Devicelayer übertragen werden kann. In Fig. 30A wird der Schichtaufbau des Systems einschließlich der Elektroden (15.4) sowie dem Verbindungsmaterial zur formschlüssigen Verbindung (15.5) dargestellt. Fig. 30B zeigt einen alternativen Schichtaufbau, bei dem der Handlelayer (15.3) nicht strukturiert ist, sondern der Devicelayer (15.1) direkt mit dem flexiblen Gehäuse (11) über das Verbindungsmaterial (15.5) verbunden ist.

Fig. 30C zeigt eine weitere mögliche Anordnung bei der der Devicelayer direkt über die Verbindungselemente (1a, 1b, ggf. 1c, 1d) mit dem flexiblen Gehäuse verbunden ist. Damit sich die frei beweglichen Strukturen am Devicelayer, wie beispielsweise der mechanische Verstärker (2) oder der elektromechanische Wandler (3) frei bewegen können, weist das flexible Gehäuse (11) eine Kavität im Bereich der frei beweglichen Komponenten auf. Eine stoffschlüssige Verbindung zwischen der Verbindungselemente (1a, 1b) und dem flexiblen Gehäuse ist hier auch ohne Verbindungsmaterial beispielsweise über Anodisches-, Eutektisches-, oder Fusionsbonden möglich, sofern ein geeignetes Material, wie beispielsweise Glas oder Silicium als Substrat für das flexible Gehäuse (11) genutzt wird. Zur stoffschlüssigen Verbindung zwischen dem flexiblen Gehäuse (11) und dem Mess- oder Prüfobjekt (12) wird als Verbindungsmaterial (15.5) in einer bevorzugten Ausführungsform ein Lot, ein Klebstoff und/ oder ein Schichtstapel reaktiver Metallschichten (z.B. aus Al/Ni, Si/Zr, Ni/Ti) auf dem flexiblen Gehäuse abgeschieden und strukturiert. Die Nutzung strukturierter reaktiver Metallschichten erlaubt ein stoffschlüssiges Fügen der Messvorrichtung mit dem flexiblen Gehäuse an einem Messobjekt durch lokales und oberflächiges Verschweißen/ Löten durch eine stark exotherme Legierungsbildung der gestapelten Metallschichten nach Überschreiten einer zur Reaktion notwendigen Aktivierungsenergie durch beispielsweise einen Laserimpuls oder einen Zündfunken.

Der genaue Fertigungsablauf kann variieren. Ein grundsätzlicher Prozessablauf wird in Fig. 31 gezeigt und beispielhaft im Folgenden erläutert.

Ausgangspunkt für den Fertigungsablauf ist ein SOI Substrat bzw. ein Substrat bestehend aus drei Ebenen wobei die mittlere Ebene (15.2) eine Opferschicht darstellt, die Devicelayer Ebene (15.1) die Funktionsschicht und die Handlelayer Ebene (15.3) die Aufgabe des mechanischen Gestells (13) übernimmt (Fig. 31A). Zunächst wird auf dem Devicelayer (15.1) des Wafers zur elektrischen Kontaktierung eine Metallschicht, z.B. aus Aluminium, abgeschieden (Fig. 31B). Anschließend wird eine Fotolithografie durchgeführt, bei der die gewünschte Geometrie auf dem Devicelayer abgebildet wird. Durch einen weiteren Ätzschritt wird die zuvor abgeschiedene Metallschicht partiell entfernt und die Schicht somit strukturiert. Der verbleibende Fotoresist am Handlelayer wird dann entfernt. Alternativ ist auch eine Strukturierung der Elektroden über ein Lift-off Verfahren möglich.

Damit beim Fügen des Sensors mit einem Messobjekt durch z.B. Löten nur die definierten Verbindungsstellen mit Lot benetzt werden und nicht etwa der gesamte Chip, werden die Oberflächen der Verbindungselemente (1a, 1b) zusätzlich modifiziert, wie z.B. durch Abscheidung eines Verbundmaterials (15.5) (Fig. 31B). Durch einen zweiten Lithografie-Schritt und anschließendem Abscheiden eines Haftvermittlers oder Edelmetalls oder eines reaktiven Schichtstapels aus z.B. Ni/Al werden über einen Lift-off Prozess die Verbindungsoberflächen am Handlelayer oder am Devicelayer leicht modifiziert.

Auf der Vorderseite des SOI-Wafers, also auf dem Devicelayer (15.1), wird über einen weiteren Lithografie-Prozess die Geometrie der mechanischen Komponenten des Sensors (Verstärker, ggfs. Maximalwertspeicher, ggfs. elektromechanischer Wandler, etc.) auf den Devicelayer (15.1) projiziert. Der Devicelayer (15.1) wird anschließend über reaktives Ionentiefätzen ("DRIE"-Prozess) durchgehend bis zur nächsten Schicht tiefgeätzt (Fig. 31C). Anschließend werden die Strukturen am Handlelayer bis zur Oxidschicht durchgeätzt (Fig. 31D). Zur besseren elektrischen Kontaktierung der Kontaktelektroden des elektromechanischen Wandlers können zusätzlich weitere Metallschichten an den tiefgeätzten Flanken des Devicelayer abgeschieden werden. Durch Ionenstrahlätzen können diese Metallschichten weiterhin strukturiert werden. Die Silicium-Strukturen sind bis zu dieser Stelle noch nicht frei beweglich. Zur Freistellung wird nun ein Flusssäure-Dampf oder HF-Gas (HF-Dampf)-Prozess durchgeführt, bei dem die $SiO_2$-Schicht zwischen Handle- und Devicelayer teilweise entfernt wird (Fig. 31E). Flusssäure unterätzt dabei nur diejenigen Strukturen am Devicelayer, die ausreichend schmal sind und viel Angriffsoberfläche bieten. Breite Strukturen werden langsamer unterätzt und sind daher über das SiO$_2$ immer noch gestellfest mit dem Handlelayer verbunden.

Fig. 32 zeigt einen alternativen Fertigungsablauf zur Fertigung des mikromechanischen Messsystems sowie die Montage des Messsystems auf einem flexiblen Gehäuse (11). Fig. 32A zeigt zunächst die Bereitstellung eines SOI-Substrats (15.1, 15.2, 15.3). In Fig. 32B wird die Abscheidung und Strukturierung einer Metallschicht (15.4) gezeigt die für die elektrischen Anschlüsse benötigt wird. Nach der Strukturierung des Devicelayers (15.1) über Fotolithografie und anisotropes Ätzen (Fig. 32C) werden die beweglichen Strukturen des mikromechanischen Messsystems über Flusssäure freigestellt (Fig. 32D). Fig. 32E zeigt ferner die Bereitstellung eines Substrats (15.7) für das flexible Gehäuse. Bevorzugt handelt es sich bei diesem Substrat um Glas, Glaskeramik, Keramik oder ebenfalls Silicium. Auf dem Substrat (15.7) wird zudem eine Metallschicht zum Herausführen von Elektroden (15.6) abgeschieden und strukturiert (Fig. 32F). Ferner wird wie in Fig. 32G gezeigt das Substrat (15.7) des flexiblen Gehäuses über Lithografie und Ätzen noch in der Art strukturiert, dass am Substrat Kavitäten erzeugt werden. Das SOI-Substrat und das Substrat des flexiblen Gehäuses wird in Fig. 32H an den Stellen der Verbindungselemente (1a, 1b, ggf. 1c, 1d) über einen Bondprozess gefügt. Weitere Verbindungen zur hermetischen Abdichtung sind ebenfalls möglich. Weiterhin können nun wie in Fig. 32I angedeutet Verbindungsmaterialien (15.5) wie reaktive Metallschichten, Lot oder Klebstoff flächig oder strukturiert auf der Oberfläche des flexiblen Gehäuses abgeschieden werden.

Alternativ zur Fertigung über ein SOI-Substrat ist auch die Fertigung mit Hilfe eines mehrschichtigen Aufbaus von Keramik- oder Metall-Schichten denkbar. Dabei werden die für die Funktion notwendigen Funktionsschichten (gestellfeste Ebene - Handlelayer, Ebene für frei bewegliche Elemente - Devicelayer) anstelle von Silicium durch eine Keramik oder Metallschicht umgesetzt. Auf diese Weise können Materialien verwendet werden, deren thermischer Längenausdehnungskoeffizient zum Ausdehnungskoeffizienten des Messobjektes passen. Alternativ können Materialien wie die Glaskeramiken (z.B. Zerodur) mit besonders niedrigen thermischen Ausdehnungskoeffizienten verwendet werden.

**Literatur**

Chen, C. et al. Femtosecond Laser-Inscribed High-Order Bragg Gratings in Large-Diameter Sapphire Fibers for High-Temperature and Strain Sensing. 2018, Journal of Lightwave Technology.

Gerlach, G. und W. Dötzel, Einführung in die Mikrosystemtechnik ein Kursbuch für Studierende 2006, München [u.a.]: Fachbuchverl. Leipzig im Carl Hanser Verl. 384 S.

Schomburg, W.K., Introduction to Microsystem Design. 2011, Springer.

Tian, Q. H., Yan, L. P., Yang, T., und Chen, B. Y. 2012, Recent Developments of Material Deformation Measurement. In Applied Mechanics and Materials (Vol. 117, pp. 122-128), Trans Tech Publications

Tietze, U., C. Schenk, und E. Gamm, Halbleiter-Schaltungstechnik. 2012, Springer-Verlag

VDI/VDE 2635 Blatt 1; Experimentelle Strukturanalyse Dehnungsmessstreifen mit metallischem Messgitter Kenngrößen und Prüfbedingungen; Juli 2015

VDI/VDE 2635 Blatt 2; Experimentelle Strukturanalyse Empfehlung zur Durchführung von Dehnungsmessungen bei hohen Temperaturen; Februar 2015

**Bezugszeichenliste**

| | |
|---|---|
| 1a: | flexibel gelagertes Verbindungselement |
| 1b: | gestellfest gelagertes Verbindungselement |
| 1c: | Verbindungselement für Kompensationsmechanismus |
| 1d: | Verbindungselement für Kompensationsmechanismus |
| 2: | mechanischer Verstärker |
| 2.1: | Verstärkereingang |
| 2.2: | Verstärkerausgang |

2.3.1: Hebel
2.3.2: Hebelverbinder
2.3.3: Schubgelenk
2.3.4: Kurvenschreibe
2.3.5: Drehgelenk
2.3.6: gestellfestes Drehgelenk
2.4: Erste Hebelpaarung
2.5: j-te Hebelpaarung
2.6: $m$-te Hebelpaarung (hinterste Hebelpaarung in der seriellen Anordnung an Hebelpaarungen)
3: elektro-mechanischer Wandler
3.1: mikromechanischer Analog-Digital Wandler
3.2: mikromechanische Positionsschalter
3.3: kapazitiver Wandler
3.4: kontaktbasierter mikromechanischer A/D Wandler mit Dezimalkodierung
3.1.1: Fingerelektroden montiert an Läufer
3.1.2: Gegenelektroden (gestellfest)
3.1.3: Fingerelektrodengruppen
3.1.4: Federaufhängung Gegenelektrode
3.1.5: Pull-down/Pull-up Widerstand
3.1.6: Spannungsquelle oder Spannungsanschluss
3.1.7: Spannungsabgriff an Bit 0
3.1.8: Spannungsabgriff an Bit 1
3.1.9: Vorzeichenzweig zur Codierung der Dehnungsrichtung
3.3.1: gestellfeste Elektroden
3.3.2: bewegliche Elektroden
3.4.1: Kodiereinheit zur Kodierung der Dezimalstellen $10^0$
3.4.2: Kodiereinheit zur Kodierung der Dezimalstellen $10^1$
4: mechanischer Maximalwertspeicher
4.1: Rastelemente
4.1.1: erste Rastelement mit $k$ Rastzähnen (Ausführungsbeispiel)
4.1.2: (n-1)-tes Rastelement mit z.B. $k$ Rastzähnen (Ausführungsbeispiel)
4.1.3: n-tes Rastelement mit z.B. $k$ Rastzähnen
4.2: Sperrklingen
4.2.1: erste Sperrklinge zugehörig zu erstem Rastelement
4.2.2: (n-1)-te Sperrklinge zugehörig zu (n-1)-tem Rastelement
4.2.3: $n$-te Sperrklinge zugehörig zu $n$-tem Rastelement
4.3: Einzelner Rastzahn an Rastelement
5: Rückstellmechanismus
5.1: elektrostatischer Aktor
5.2: Rückstellkupplung
5.3: Führungsfeder Rückstellmechanismus
5.4: Überträger (Rückstellmechanismus)
6: Kupplung
6.1: erster Stößel
6.2: zweiter Stößel
7: Führungsfedern
8: Läufer
10: Dehnungssensor
11: flexibles Gehäuse
12: Prüfobjekt, Prüfkörper, Messobjekt
13: Substrat/ Gestell des Dehnungssensors
14: Bondelektroden
15.1: Substratebene beinhaltend den mechanischen Aufbau, Devicelayer (vorzugsweise Silicium)
15.2: Substratebene beinhaltend eine Opferschicht, BOX-Layer (vorzugsweise $SiO_2$)
15.3: Substratebene beinhaltend das mechanische Gestell, Handlelayer (vorzugsweise Silicium)
15.4: Elektrodenmaterial (vorzugsweise Aluminium, Titan, Nickel, Chrom oder Gold)
15.5: Verbindungsmaterial zum stoffschlüssigen Verbund zwischen Dehnungssensor und Messobjekt (vorzugsweise Klebstoff, Lot, reaktive Metallschichten)

15.6:     Vom Dehnungssensor auf das Gehäuse herausgeführte Elektroden
15.7:     Substrat des flexiblen Gehäuses (vorzugsweise Glas, Glaskeramik, Keramik, Silicium)
16:       mechanischer Eingangswandler
16.1:     seismische Prüfmasse
17:       Kompensationsmechanismus
17.1:     Krafttransformator, Feder
17.2:     Umlenkmechanismus

**Patentansprüche**

1. Mikromechanisches Messsystem zur Messung von Dehnungen an einem Messobjekt (12) umfassend mindestens zwei Verbindungselemente (1a, 1b) zur Einkopplung des Dehnungssignals vom Messobjekt (12) in das mikromechanische Messsystem; einen mechanischen Verstärker (2); einen elektromechanischen Signalwandler (3); und einen mechanischen Kompensationsmechanismus (17), der dazu ausgeführt ist, die isotrope Wärmeausdehnung eines Messobjektes (12) rein mechanisch zu kompensieren und von einem uniaxialen Dehnungssignal des Messobjektes (12) zu entkoppeln, sodass temperaturunabhängige Dehnungsmessungen ermöglicht werden, wobei der Kompensationsmechanismus (17) mindestens ein zusätzliches flexibel gelagertes Verbindungselement (1c, 1d) und mindestens einen Umlenkmechanismus (17.2) umfasst, der dazu ausgeführt ist, eine Verschiebung des Verbindungselements (1c, 1d) in seitlicher Richtung in eine Verschiebung in Längsrichtung zu transformieren, und weiterhin mindestens einen Krafttransformator (17.1) umfasst, der dazu ausgeführt ist, die jeweilige Verschiebung der Verbindungselemente (1a, 1b, 1c, 1d) in eine Kraft (F) umzuwandeln,

   wobei bei isotroper Ausdehnung des Messobjektes (12) die seitliche Verschiebung der zusätzlichen Verbindungselemente (1c, 1d) über den Umlenkmechanismus (17.2) in eine Längsverschiebung transformiert und über den Krafttransformator (17.1) in eine Kraft (F1) in Längsrichtung (y-Richtung) gewandelt wird, und eine zur Kraft (F1) betragsmäßig gleiche, aber entgegengesetzte Kraft (F2) über mindestens eins der flexibel gelagerte Verbindungselemente (1a, 1b) und den zugehörigen Krafttransformator generiert wird, wobei das flexibel gelagerte Verbindungselement über den zugehörigen Krafttransformator mit einem Eingang des Verstärkers verbunden ist,
   sodass sich die resultierende Kraft kompensiert und keine Verschiebung (yin) an den angeschlossenen mechanischen Verstärker (2) übertragen wird, während zusätzliche mechanisch induzierte axiale Dehnung in Längsrichtung (y-Richtung) an den mechanischen Verstärker weitergeleitet und infolgedessen verstärkt wird.

2. Mikromechanisches Messsystem gemäß Anspruch 1, wobei besagter elektromechanischer Wandler (3) ein kapazitiver Wandler (3.3) ist.

3. Mikromechanisches Messsystem gemäß einem der Ansprüche 1 - 2, wobei besagter elektromechanischer Wandler (3) einen elektromechanischen Analog-Digital Wandler (3.1) beinhaltet.

4. Mikromechanisches Messsystem gemäß einem der Ansprüche 1 - 3, weiterhin umfassend einen mechanischen Maximalwertspeicher (4) zur mechanischen Speicherung der maximal erreichten Dehnung des Messobjektes, wobei der mechanische Maximalwertspeicher (4) rastzahnbasiert ist.

5. Mikromechanisches Messsystem gemäß einem der Ansprüche 1 - 4, wobei besagte Verbindungselemente (1) in einem bekannten Abstand zueinander am Messsystem angeordnet sind und wobei mindestens ein Verbindungselement gestellfest mit dem Substrat des Messsystems verbunden ist und mindestens ein weiteres federgelagert translatorisch oder rotatorisch verschiebbar am Messsystem gelagert ist, wobei es mechanisch direkt oder indirekt über eine Kupplung mit dem mechanischen Verstärker verbunden ist.

6. Mikromechanisches Messsystem gemäß einem der Ansprüche 1 - 5, weiterhin umfassend einen elektromechanischen Wandler (3) in Form eines Positionsschalters (3.2), der dazu ausgeführt ist, in Abhängigkeit der Verschiebung einen Schaltkontakt zu schließen oder zu öffnen.

7. Verfahren zur Messung der Dehnung eines Messobjektes mit Hilfe eines mikromechanischen Messsystems gemäß einem der Ansprüche 1 - 6, umfassend mindestens folgende Schritte:

   (i) Direktes oder indirektes Verbinden des Messsystems umfassend mindestens zwei Verbindungselemente (1) mit der Oberfläche des Messobjektes (12) oder über ein relativ zum Messobjekt weiches Gehäuse (11);

(ii) Messung der Distanzänderung der Verbindungselemente (1);

(iii) Trennung von sich überlagernder isotrop wirkender Dehnung von anisotrop wirkender Dehnung über einen Kompensationsmechanismus (17) und Bereitstellung eines um den isotrop wirkenden Dehnungsanteil bereinigten Messsignals in Form einer Verschiebung;

(iv) Verstärkung der bereitgestellten Verschiebung über einen mechanischen Verstärker (2)

(v) Wandlung der verstärkten Verschiebung über einen elektromechanischen Wandler in eine analoge oder digitale elektrische Größe; und

(vi) Berechnung der Dehnung des Messobjektes aus der bekannten Distanz der Verbindungselemente und dem verstärkten Signal der Distanzänderung.

**8.** Verfahren zur Messung gemäß Anspruch 7, wobei in Schritt (v) das Verschiebungssignal über einen kapazitiven Wandler (3.3) in eine Kapazitätsänderung überführt wird.

**9.** Verfahren zur Messung gemäß Anspruch 7, umfassend folgenden weiteren Schritt (iva) zwischen besagten Schritten (iv) und (v):
Speicherung des erreichten Maximalwerts der Dehnung in einem mechanischen Maximalwertspeicher (4).

**10.** Verfahren zur Messung gemäß Anspruch 9, **dadurch gekennzeichnet, dass** eine autonome kontinuierliche Dehnungsmessung des Messobjektes ohne kontinuierliche elektrische Energieversorgung durchgeführt und der maximal erreichte Dehnungswert in Form einer fixierten Verschiebung über einen mechanischen rastzahnbasierten Maximalwertspeicher gespeichert wird.

**11.** Verfahren zur Messung gemäß einem der Ansprüche 7 oder 8, umfassend folgenden weiteren Schritt (iii-a) zwischen besagten Schritten (iv) und (v):
Erzeugung eines binären elektrischen Signals mit Hilfe eines Positionsschalters (3.2).

**Claims**

**1.** A micromechanical measurement system for measuring strains on an object under test (12), comprising at least two coupling elements (1a, 1b) for coupling the strain signal from the object under test (12) into the micromechanical measurement system; a mechanical amplifier (2); an electromechanical signal converter (3); and a mechanical compensation mechanism (17) configured to compensate for the isotropic thermal expansion of an object under test (12) purely mechanically and to decouple it from a uniaxial strain signal of the object under test (12), thereby enabling temperature-independent strain measurements, wherein the compensation mechanism (17) comprises at least one additional flexibly supported connecting element (1c, 1d) and at least one deflection mechanism (17.2) configured to transform a displacement of the connecting element (1c, 1d) in the lateral direction into a displacement in the longitudinal direction, and further comprises at least one force transducer (17.1) configured to convert the respective displacement of the connecting elements (1a, 1b, 1c, 1d) into a force (F),

wherein, in the case of isotropic expansion of the object under test (12), the lateral displacement of the additional connecting elements (1c, 1d) is transformed into a longitudinal displacement via the deflection mechanism (17.2) and converted into a force (F1) in the longitudinal direction (y-direction) via the force transducer (17.1), and a force (F2) that is equal in magnitude but opposite to the force (F1) is generated via at least one of the flexibly supported connecting elements (1a, 1b) and the associated force transducer, wherein the flexibly supported connecting element is connected via the associated force transducer to an input of the amplifier, such that the resulting force is compensated and no displacement (yin) is transmitted to the connected mechanical amplifier (2), while additional mechanically induced axial strain in the longitudinal direction (y-direction) is transmitted to the mechanical amplifier and, as a result, amplified.

**2.** A micromechanical measurement system according to claim 1, wherein said electromechanical converter (3) is a capacitive converter (3.3).

**3.** A micromechanical measurement system according to one of claims 1-2, wherein said electromechanical converter (3) includes an electromechanical analog-to-digital converter (3.1).

**4.** A micromechanical measurement system according to any one of claims 1-3, further comprising a mechanical maximum value storage (4) for mechanically storing the maximum strain achieved by the object under test, wherein the mechanical maximum value storage (4) is ratchet-tooth-based.

**5.** A micromechanical measurement system according to any one of claims 1 - 4, wherein said connecting elements (1) are arranged on the measurement system at a known distance from one another, and wherein at least one connecting element is fixedly connected to the substrate of the measurement system, and at least one further connecting element is mounted on the measurement system in a spring-mounted manner being displaceable in a translational or rotational manner, and is connected mechanically, either directly or indirectly, via a coupling to the mechanical amplifier.

**6.** A micromechanical measurement system according to any one of claims 1-5, further comprising an electromechanical converter (3) in the form of a position switch (3.2), which is configured to close or open a switching contact depending on the displacement.

**7.** A method for measuring the strain of an object under test using a micromechanical measurement system according to any one of claims 1-6, comprising at least the following steps:

(i) Directly or indirectly connecting the measurement system, comprising at least two connecting elements (1), to the surface of the object under test (12) or via a housing (11) being flexible relative to the object under test;
(ii) Measuring the change in distance of the connecting elements (1);
(iii) Separating superimposed isotropic strain from anisotropic strain via a compensation mechanism (17) and providing a measurement signal in the form of a displacement that has been corrected for the isotropic strain component;
(iv) Amplifying the provided displacement via a mechanical amplifier (2)
(v) Conversion of the amplified displacement into an analog or digital electrical signal via an electromechanical converter; and
(vi) Calculation of the strain of the object under test based on the known distance between the connecting elements and the amplified signal representing the change in distance.

**8.** A method for measuring according to claim 7, wherein, in step (v), the displacement signal is converted into a change in capacitance via a capacitive converter (3.3).

**9.** A method for measuring according to claim 7, comprising the following additional step (iv-a) between said steps (iv) and (v):
Storing the maximum value of the strain reached in a mechanical maximum value storage (4).

**10.** A method for measuring according to claim 9, **characterized in that** an autonomous continuous strain measurement of the object under test is performed without a continuous electrical power supply, and the maximum strain value reached is stored in the form of a fixed displacement via a mechanical ratchet-tooth-based maximum value storage.

**11.** A method for measurement according to one of claims 7 or 8, comprising the following additional step (iii-a) between said steps (iv) and (v):
Generating a binary electrical signal using a position switch (3.2).

**Revendications**

**1.** Système de mesure micromécanique destiné à mesurer des dilatations sur un objet à mesurer (12), comportant au moins deux éléments de liaison (1a, 1b) pour coupler le signal de dilatation provenant de l'objet à mesurer (12) dans le système de mesure micromécanique ; un amplificateur mécanique (2) ; un convertisseur de signal électromécanique (3) ; et un mécanisme de compensation mécanique (17) conçu pour compenser la dilatation thermique isotrope d'un objet à mesurer (12) de manière purement mécanique et la découpler d'un signal de dilatation uniaxiale de l'objet à mesurer (12), de manière à permettre des mesures de dilatation indépendantes de la température, ledit mécanisme de compensation (17) comportant au moins un élément de liaison supplémentaire monté de manière flexible (1c, 1d) et au moins un mécanisme de renvoi (17.2) conçu pour transformer un déplacement de l'élément de liaison (1c, 1d) dans le sens latéral en un déplacement dans le sens longitudinal, et comportant en outre au moins un transducteur de force (17.1) conçu pour transformer le déplacement respectif des éléments de liaison (1a, 1b, 1c, 1d) en une force (F), dans le cas d'une dilatation isotrope de l'objet à mesurer (12), le déplacement latéral des éléments de liaison supplémentaires (1c, 1d) étant transformé via le mécanisme de renvoi (17.2) en un déplacement longitudinal et transformé via le transducteur de force (17.1) en une force (F1) dans la direction longitudinale (direction y), et une force (F2) de même amplitude que la force (F1), mais de sens opposé, étant générée via au moins l'un des éléments de liaison montés de manière flexible (1a, 1b) et le transducteur de force associé, l'élément de liaison monté de manière flexible étant relié via le transducteur de force associé à une entrée de l'amplificateur,
de sorte que la force résultante se compense et qu'aucun déplacement (yin) n'est transmis à l'amplificateur mécanique raccordé (2), tandis que l'allongement axial supplémentaire induit mécaniquement dans le sens longitudinal (direction y) est transmis à l'amplificateur mécanique et, par conséquent, amplifié.

2. Système de mesure micromécanique selon la revendication 1, ledit convertisseur électromécanique (3) étant un convertisseur capacitif (3.3).

3. Système de mesure micromécanique selon l'une des revendications 1 à 2, ledit convertisseur électromécanique (3) comprenant un convertisseur électromécanique analogique-numérique (3.1).

4. Système de mesure micromécanique selon l'une des revendications 1 à 3, comportant en outre une mémoire mécanique de valeur maximale (4) destinée à enregistrer mécaniquement l'allongement maximal atteint par l'objet à mesurer, ladite mémoire mécanique de valeur maximale (4) étant basé sur des crans.

5. Système de mesure micromécanique selon l'une des revendications 1 à 4, lesdits éléments de liaison (1) étant disposés sur le système de mesure à une distance connue les uns des autres, et au moins un élément de liaison étant relié de manière fixe au substrat du système de mesure et au moins un autre élément de liaison étant monté sur ressorts sur le système de mesure de manière à pouvoir se déplacer en translation ou en rotation en étant relié mécaniquement, directement ou indirectement via un accouplement à l'amplificateur mécanique.

6. Système de mesure micromécanique selon l'une des revendications 1 à 5, comportant en outre un convertisseur électromécanique (3) sous forme d'un commutateur de position (3.2) conçu pour fermer ou ouvrir un contact de commutation en fonction du déplacement.

7. Procédé pour mesurer la dilatation d'un objet à mesurer à l'aide d'un système de mesure micromécanique selon l'une des revendications 1 à 6, comportant au moins les étapes suivantes :

   (i) liaison directe ou indirecte du système de mesure comportant au moins deux éléments de liaison (1) avec la surface de l'objet à mesurer (12) ou par l'intermédiaire d'un boîtier (11) souple par rapport à l'objet à mesurer ;
   (ii) mesure de la variation de distance des éléments de liaison (1) ;
   (iii) séparation de la dilatation à effet isotrope superposée de la dilatation à effet anisotrope via un mécanisme de compensation (17) et fourniture d'un signal de mesure ajusté pour tenir compte de la composante de dilatation à effet isotrope sous forme d'un déplacement ;
   (iv) amplification du déplacement produit par un amplificateur mécanique (2) ;
   (v) conversion du déplacement amplifié via un convertisseur électromécanique en une grandeur électrique analogique ou numérique ; et
   (vi) calcul de la dilatation de l'objet mesuré à partir de la distance connue des éléments de liaison et du signal amplifié correspondant à la variation de distance.

8. Procédé de mesure selon la revendication 7, dans lequel, à l'étape (v), le signal de déplacement est converti en une variation de capacité via un convertisseur capacitif (3.3).

9. Procédé de mesure selon la revendication 7, comportant l'étape supplémentaire (iv-a) suivante entre lesdites étapes (iv) et (v) :
enregistrement de la valeur maximale atteinte de l'allongement dans une mémoire mécanique de valeurs maximales (4).

10. Procédé de mesure selon la revendication 9, **caractérisé en ce qu'**une mesure autonome et continue de la dilatation de l'objet à mesurer est effectuée sans alimentation électrique continue, et **en ce que** la valeur maximale de dilatation atteinte est enregistrée via une mémoire de valeur maximale mécanique à crans sous forme d'un déplacement fixé.

11. Procédé de mesure selon l'une des revendications 7 ou 8, comportant l'étape supplémentaire (iii-a) suivante entre lesdites étapes (iv) et (v) :
génération d'un signal électrique binaire à l'aide d'un commutateur de position (3.2).

Fig. 1

Fig. 2

Fig. 3

Fig. 4

10

1a

7

2.1

3.1.5

2

2.2

3.1.1

$U_{Bit,1}$

$R$

3.1.2

7

3.1

$U_{Bit,0}$

$R$

8

$U_0$

1b

3.1.6

Fig. 5

Fig. 6

Fig. 7A

Fig. 7B

Fig. 8

Fig. 9

$y_{out} = A_{total} \cdot y_{in}$

Fig. 10

Fig. 11

Fig. 12

Fig. 13

Fig. 14

Fig. 15

8    3.1.1    3.1.2    3.1.4

$U_{in}$

$R$

Fig. 16a

8    3.1.1    3.1.2    3.1.4

$F$

$U_{in}$

$F$

$R$

Fig. 16b

| $y$ | $U_s$ | $U_{Bit,2}$ | $U_{Bit,1}$ | $U_{Bit,0}$ | $y$ | $U_s$ | $U_{Bit,2}$ | $U_{Bit,1}$ | $U_{Bit,0}$ |
|---|---|---|---|---|---|---|---|---|---|
| -7 | $U_0$ | $U_0$ | 0 | 0 | 0 | 0 | 0 | 0 | 0 |
| -6 | $U_0$ | $U_0$ | 0 | $U_0$ | 1 | $U_0$ | 0 | $U_0$ | $U_0$ |
| -5 | $U_0$ | $U_0$ | 0 | $U_0$ | 2 | $U_0$ | 0 | $U_0$ | $U_0$ |
| -4 | $U_0$ | $U_0$ | $U_0$ | 0 | 3 | $U_0$ | 0 | $U_0$ | 0 |
| -3 | $U_0$ | 0 | $U_0$ | 0 | 4 | $U_0$ | $U_0$ | $U_0$ | 0 |
| -2 | $U_0$ | 0 | $U_0$ | $U_0$ | 5 | $U_0$ | $U_0$ | 0 | $U_0$ |
| -1 | $U_0$ | 0 | $U_0$ | $U_0$ | 6 | $U_0$ | $U_0$ | 0 | $U_0$ |
| 0 | 0 | 0 | 0 | 0 | 7 | $U_0$ | $U_0$ | 0 | 0 |

Fig. 17

Fig. 18

Fig. 19

Fig. 20

Fig. 21

Fig. 22

4

8
4.1
4.3
4.2
4.4

γ

$a_{RZ}$

y
x

Fig. 23

4

8
4.1.3
4.3

$a_{RZ}$

$b_{RZ,3}$

4.1.2

$a_{RZ}$

$b_{RZ,2}$

$a_{RZ}$

$b_{RZ,1}$

4.2.3
4.2.2

4.2.1

4.1.1

Fig. 24

A

$$y_S = a_{RZ} + 0 \cdot \frac{a_{RZ}}{2}$$

B

$$y_S = a_{RZ} + 1 \cdot \frac{a_{RZ}}{2}$$

C

$$y_S = a_{RZ} + 2 \cdot \frac{a_{RZ}}{2}$$

D

$$y_S = a_{RZ} + 3 \cdot \frac{a_{RZ}}{2}$$

4

8    4.1.3

4.2.3

4.1.1

4.2.1

Fig. 25

A

8
4.1
4.3
4.2

5.1

5.3

5.2

5.4

y
x

5    4    5

B

7

8
4.1
4.2

5.1

5.3

5.2

5.4

y
x

Fig. 26

A          B          C

## Fig. 27

## Fig. 28

**16.1**

**1a**

**10**

**7**

**6**

**2**

**3.1.5**

**3.1.1**

$U_{Bit,1}$

$R$

**3.1.2**

**3.1**

$U_{Bit,0}$

$R$

**7**

**8**

**4.1**

$U_0$

**4.2**

**5.1**

**4**

**3.1.6**

**5.3**

**5.2**

**5**

**5.4**

**1b**

Fig. 29

A

15.4
15.1
15.2
10 →
15.3
15.5

12

B

1a
15.3
15.2
10 →
15.4
1b
15.1
15.6
11

12

C

1a
15.3
15.2
10 →
15.6
1b
15.1
11
15.5

12

Fig. 30

15.1

15.2

15.3

A

B

15.4

15.5

C

D

E

Fig. 31

Fig. 32

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10214984 B4
- EP 2294374 B1
- DE 102014004544 T5
- DE 102010038062 B9, Tian
- DE 102015002452 T5
- DE 69822097 T2
- DE 102016202769 A1
- EP 2705330 B1
- US 9327962 B2

**In der Beschreibung aufgeführte Nicht-Patentliteratur**

- **PHILIP SCHMITT et al.** A Micromechanical Binary Counter with MEMS-Based Digital-to-Analog Converter. *PROCEEDINGS*, 21 November 2018, vol. 2 (13), 807
- **CHEN, C. et al.** Femtosecond Laser-Inscribed High-Order Bragg Gratings in Large-Diameter Sapphire Fibers for High-Temperature and Strain Sensing. *Journal of Lightwave Technology*, 2018
- **GERLACH, G.** ; **W. DÖTZEL**. Einführung in die Mikrosystemtechnik ein Kursbuch für Studierende. Carl Hanser Verl., 2006, 384
- **SCHOMBURG, W.K.** Introduction to Microsystem Design.. Springer, 2011
- **TIAN, Q. H.** ; **YAN, L. P.** ; **YANG, T.** ; **CHEN, B. Y.** Recent Developments of Material Deformation Measurement.. *Applied Mechanics and Materials*, 2012, vol. 117, 122-128
- **TIETZE, U.** ; **C. SCHENK** ; **E. GAMM**. Halbleiter-Schaltungstechnik. Springer-Verlag, 2012
- Experimentelle Strukturanalyse Dehnungsmessstreifen mit metallischem Messgitter Kenngrößen und Prüfbedingungen. *VDI/VDE 2635 Blatt 1*, July 2015
- Experimentelle Strukturanalyse Empfehlung zur Durchführung von Dehnungsmessungen bei hohen Temperaturen. *VDI/VDE 2635 Blatt 2*, February 2015